(19) Europäisches Patentamt
European Patent Office
Office européen des brevets

(11) Veröffentlichungsnummer: **0 170 336 B1**

# (12) EUROPÄISCHE PATENTSCHRIFT

(45) Veröffentlichungstag der Patentschrift: **06.11.91**

(51) Int. Cl.⁵: **H04L 12/42**

(21) Anmeldenummer: **85201227.7**

(22) Anmeldetag: **23.07.85**

## (54) Anordnung zur Informationsübertragung mit Rekonfiguration.

(30) Priorität: **28.07.84 DE 3427891**

(43) Veröffentlichungstag der Anmeldung:
**05.02.86 Patentblatt 86/06**

(45) Bekanntmachung des Hinweises auf die Patenterteilung:
**06.11.91 Patentblatt 91/45**

(84) Benannte Vertragsstaaten:
**CH DE FR GB IT LI**

(56) Entgegenhaltungen:
**BE-A- 895 438**
**DE-A- 3 012 438**
**DE-A- 3 340 992**
**US-A- 4 048 446**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten:
**DE**

Patentinhaber: **N.V. Philips' Gloeilampenfabrieken**
**Groenewoudseweg 1**
**NL-5621 BA Eindhoven(NL)**
(84) Benannte Vertragsstaaten:
**CH FR GB IT LI**

(72) Erfinder: **Grobel, Dieter**
**Auf der Wurth 17**
**W-2807 Achim(DE)**
Erfinder: **Jathe, Peter**
**Eberechenweg 27**
**W-2815 Daverden(DE)**
Erfinder: **Steffen, Peter, Dr.**
**Hainbuchenweg 8**
**W-2803 Sudweyhe(DE)**

(74) Vertreter: **Poddig, Dieter, Dipl.-Ing. et al**
**Philips Patentverwaltung GmbH Wendenstrasse 35 Postfach 10 51 49**
**W-2000 Hamburg 1(DE)**

EP 0 170 336 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anordnung zur Informationsübertragung zwischen einer Anzahl Anschlußeinheiten, an die informationsaufnehmende und/oder informationsabgebende Geräte angeschlossen sind und von denen jede Anschlußeinheit mindestens zwei getrennte Informationsanschlüsse mit je mindestens zwei Leitungsanschlüssen für zwei Übertragungswege aufweist, über die die Anschlußeinheiten miteinander verbunden sind, so daß im ungestörten Fall mindestens ein alle Anschlußeinheiten nacheinander durchlaufender Informationsübertragungsweg entsteht, in dem ein ständiger Informationsfluß vorhanden ist, wobei jede Anschlußeinheit zur Überwachung des Informationsflusses auf dem Informationsübertragungsweg eine Detektoreinrichtungaufweist, die bei Feststellung einer Störung des Informationsflusses die Informationsanschlüsse so miteinander verbindet, daß außerhalb der die Störung hervorrufenden Stelle wieder ein die Anschlußeinheiten verbindender Übertragungsweg vorhanden ist, wobei in jeder Anschlußeinheit die Detektoreinrichtung bei Feststellung einer Störung des Informationsflusses eine Prüfinformation an mindestens eine benachbarte Anschlußeinheit aussendet und jede von einer anderen Anschlußeinheit empfangene Prüfinformation liest und danach abhängig von den empfangenen Prüfinformationen die Informationsanschlüsse untereinander verbindet.

Eine derartige Anordnung ist bekannt aus der BE-A-895.438 & GB-A-2133952. Darin sind eine Anzahl von Anschlußeinheiten zu einem geschlossenen Ring geschaltet. Jede Anschlußeinheit weist zwei Informationsanschlüsse für eine eintreffende und eine abgehende Leitung auf. Durch diese Leitungen zwischen den Informationsanschlüssen sind die Anschlußeinheiten derart miteinander verbunden, daß sich zwei voneinander getrennte geschlossene Informationsübertragungswege ergeben, deren Übertragungsrichtung zueinander entgegengesetzt ist, wobei zur Informationsübertragung nur einer der beiden Informationsübertragungswege verwendet wird, wenn alle Verbindungen zwischen allen Anschlußeinheiten intakt sind. Der andere Informationsübertragungsweg dient zur Reserve bei Störungen. Eine Informationsübertragung von einer beliebigen Anschlußeinheit zu einer beliebigen anderen Anschlußeinheit erfolgt dabei dadurch, daß diese Anschlußeinheit an einer freien Stelle innerhalb des Informationsflusses eine Nachricht einspeist, die mit der Adresse der anderen Anschlußeinheit versehen ist, und alle Anschlußeinheiten überprüfen ständig den Informationsfluß, ob darin die eigene Adresse enthalten ist. Wenn dies der Fall ist, wird die zugehörige Nachricht entnommen und der Informationsfluß vorzugsweise ohne diese Nachricht weitergesandt. Auf diese Weise kann eine Anschlußeinheit eine Nachricht im Extremfall zu der ihr in Informationsflußrichtung unmittelbar vorhergehenden Anschlußeinheit übertragen, wobei lediglich eine Zeitverzögerung durch die Laufzeit der Nachricht durch praktisch den gesamten Informationsübertragungsweg auftritt.

Falls eine Störung in dem für die Informationsübertragung verwendeten Informationsübertragungsweg auftritt, beispielsweise durch eine Unterbrechung der äußeren Verbindungen zwischen den Anschlußeinheiten oder einen Fehler in dem Informationsübertragungsweg innerhalb einer Anschlußeinheit, wird dies in der folgenden Anschlußeinheit dadurch bemerkt, daß keine Informationen mehr eintreffen, insbesondere keine Synchronisierinformationen innerhalb gewisser, festgelegter Zeitabstände. Diese folgende Anschlußeinheit unterbricht dann den bisher nicht verwendeten Informationsübertragungsweg und verbindet dessen Eingang mit dem Ausgang für den ursprünglichen Informationsübertragungsweg. Da auch der für die Informationsübertragung nicht verwendete Weg ständig darauf überwacht wird, ob er intakt ist, indem ständig eine Überwachungsinformation übertragen wird, stellt die der Fehlerstelle vorhergehende Anschlußeinheit den Ausfall dieser Überwachungsinformation fest und verbindet den Eingang des bisher für die Informationsübertragung verwendeten Weges mit dem Ausgang des anderen Informationsübertragungsweges. Auf diese Weise wird die Fehlerstelle durch den anderen Informationsübertragungsweg überbrückt, wobei zwar die Laufzeiten von übertragenen Nachrichten etwa verdoppelt wird, jedoch weiterhin eine Übertragung von Nachrichten von einer beliebigen Anschlußeinheit zu einer beliebigen anderen, außerhalb der Störungsstelle liegenden Anschlußeinheit möglich ist.

Durch die Verwendung des zweiten Weges nur im Fehlerfall werden dabei also erhebliche Umschaltungen und Umkonfigurationen erforderlich, die erheblichen Aufwand erfordern. Außerdem entsteht beim Auftreten eines Fehlers dadurch, daß jede Anschlußeinheit über jede ausgehende Leitung die eigene Prüfinformation aussendet, ein gewisser Zeitbedarf, da das Aussenden der Prüfinformation über verschiedene Leitungen und insbesondere das Auswerten der auf mehreren eingehenden Leitungen eintreffenden Prüfinformationen bei begrenztem Aufwand allgemein nicht gleichzeitig, sondern nur nacheinander erfolgen kann.

Aufabe der Erfindung ist es, eine Anordnung der eingangs genannten Art anzugeben, die im Fehlerfall eine einfache und schnelle Umschaltung der einzelnen Anschlußeinheiten ermöglicht.

Diese Aufgabe wird erfindungsgemäß dadurch gelöst, daß von den alle Anschlußeinheiten verbindenden Übertragungswegen der eine als Schreib-

Kanal nur zum Übertragen von ausgesendeten, noch nicht ausgewerteten Informationen und der andere der beiden als Lese-Kanal mit dem Ende des Schreib-Kanals nach dessen Durchlaufen aller Anschlußeinheiten verbunden ist und nur zum Übertragen der von allen Anschlußeinheiten ausgesendeten, zu verarbeitenden Informationen dient, daß im gestörten Fall in jeder Anschlußeinheit die Detektoreinrichtung die Leitungsanschlüsse so miteinander verbindet, daß jede von einer anderen Anschlußeinheit empfangene Prüfinformation an diese zurückgesendet wird und daß die Verbindung zwischen beiden Übertragungswegen im gestörten Fall in derjenigen Anschlußeinheit erfolgt, die nach Feststellung einer Störung des Informationsflusses die eigene im Schreib-Kanal gesendete Prüfinformation nicht richtig erhalten hat, während in der Anschlußeinheit, die keine von einer anderen Anschlußeinheit ausgesandte Prüfinformation empfangen hat, die Verbindung des Schreib-Kanals mit einer in jeder Anschlußeinheit vorhandenen Synchronisiereinrichtung und eine Verbindung des Lese-Kanals mit einem Abschluß erfolgt.

Eine derartige Anordnung ergibt eine einfache Steuerung der Verbindungen der Informationsanschlüsse und der Synchronisiereinrichtung innerhalb jeder Anschlußeinheit. Ferner werden dadurch, daß jede von einer Anschlußeinheit ausgesendete Prüfinformation unmittelbar an (diese zurückgesendet wird jeweils zwei Leitungen gleichzeitig geprüft, nämlich die bzw. jeweils eine ausgehende und zugehörige eingehende Leitung, was eine schnelle und einfache Auswertung ergibt. Außerdem läßt sich durch die einfache Auswertung, welche Anschlußeinheit keine richtige bzw. überhaupt keine Prüfinformation erhalten hat, auf einfache Weise feststellen, in welcher Anschlußeinheit die Synchronisiereinrichtung an dem Schreib-Kanal angeschaltet und die Verbindung zwischen den beiden Übertragungswegen vorgenommen werden muß. Die Trennung der Übertragungswege in Schreib- und Lese-Kanal erübrigt auch jeglichen Laufzeitausgleich, der sonst allgemein notwendig ist.

Eine Ausgestaltung der Erfindung bei Verwendung eines getrennten Schreib- und Lese-Kanals ist dadurch gekennzeichnet, daß jeder Informationsanschluß sowohl des Schreib-Kanals als auch des Lese-Kanals mit je zwei Leitungsanschlüssen aufweist, von denen der eine einen Informationsfluß über eine von einer anderen Anschlußeinheit eingehende Leitung empfängt und der andere einen Informationsfluß über eine zu dieser anderen Anschlußeinheit abgehende Leitung aussendet, wobei ein alle Anschlußeinheiten umfassender Informationsweg gebildet wird, in dem Schreib-Kanal und Lese-Kanal getrennt parallel verlaufen, daß in jeder Anschlußeinheit die Detektoreinrichtung bei Feststellung einer Störung des Informationsflusses über alle ausgehenden Leitungsanschlüsse des Schreib-Kanals aller Informationsanschlüsse die Prüfinformation aussendet und die auf allen eingehenden Leitungsanschlüssen beider Kanäle aller Informationsanschlüsse eintreffende Prüfinformation auswertet und nur solche Leitungsanschlüsse mit anderen Leitungsanschlüssen verbindet, bei denen die an beiden Leitungsanschlüssen beider Kanäle angeschlossenen äußeren Verbindungen als intakt festgestellt worden sind. Dadurch ist die Wahl der Anschlußeinheit, in der die Synchronisiereinrichtung an die ausgehende Leitung des Schreib-Kanals angeschlossen ist, nicht mehr von dem Ende des Übertragungsweges abhängig, sondern es können andere Kriterien verwendet werden. Dies ist für manche Ausführungen vorteilhafter, wie später erläutert wird.

Ein solches anderes Kriterium besteht nach einer Weiterbildung der erfindungsgemäßen Anordnung darin, daß jeder Anschlußeinheit der Anordnung eine andere Ordnungsnummer zugeordnet ist, daß jede Anschlußeinheit in der Prüfinformation die eigene Ordnungsnummer mit aussendet und daß jede Anschlußeinheit die in den von den anderen Anschlußeinheiten empfangenen Prüfinformationen enthaltenen Ordnungsnummern auswertet. Die Ordnungsnummer ermöglicht dann, die Anschlußeinheit zu bestimmen, die ihre interne Synchronisiereinrichtung mit der ausgehenden Schreibleitung eines Informationsanschlusses verbindet.

Um auch im Falle einer mehrfachen Störung mindestens einen Informationsübertragungweg zu rekonfigurieren, der möglichst viele Anschlußeinheiten miteinander verbindet, ist es beispielsweise aus der DE-PS 25 52 953 oder aus IBM Technical Disclosure Bulletin Vol. 21, No. 8, January 1979, Seiten 3349 bis 3350 bekannt, jede Anschlußeinheit mit mehr als zwei Informationsanschlüssen zu versehen. Insbesondere werden zusätzliche Informationsübertragungswege geschaffen, die jeweils eine oder mehrere benachbarte Anschlußeinheiten überspringen. Zur Durchführung der Rekonfiguration ist in der letzteren Druckschrift eine zentrale Einheit vorgesehen, während bei der erstgenannten DE-PS 25 52 953 in jeder Anschlußeinheit ein gemeinsamer interner Informationsknotenpunkt von einer eingehenden Leitung auf eine andere eingehende Leitung umgeschaltet wird, wenn auf der einen eingehenden Leitung der Informationsfluß unterbrochen wird, während der gemeinsame Informationsknotenpunkt mit mindestens zwei getrennten Ausgängen fest verbunden ist. Bei diesen bekannten Anordnungen ist eine weitgehende Rekonfiguration jedoch nur dann möglich, wenn die Störstellen eine bestimmte Verteilung aufweisen, wobei für jede Anschlußeinheit vier Informationsanschlüsse erforderlich sind. Außerdem ist nicht angegeben, wie eine Rekonfiguration erfolgen soll, wenn an einer

Stelle der Ring mit allen Zweigverbindungen vollständig unterbrochen ist. Ferner ist bei den genannten Anordnungen ebenfalls ein Laufzeitausgleich erforderlich.

Eine Ausgestaltung der Erfindung, die bei beliebig verteilten Störstellen alle Anschlußeinheiten, die über je einen Informationsanschluß miteinander verbunden sind, zu einer vollständigen Anordnung zur Informationsübertragung mit mindestens einem durchgehenden Schreib- und Lese-Kanal rekonfiguriert, wobei ebenfalls kein Laufzeitausgleich erforderlich ist, ist dadurch gekennzeichnet, daß bei mindestens drei Informationsanschlüssen je Anschlußeinheit im ungestörten Fall jeweils eine Gruppe von Anschlußeinheiten über die Verbindung von je zwei der Informationsanschlüsse mindestens einen geschlossenen Informationsübertragungsweg bildet und der bzw. die weiteren Informationsanschlüsse mit entsprechenden Informationsanschlüssen anderer Gruppen verbunden sind, wobei in jeder Anschlußeinheit eingehende Leitungsanschlüsse mit jeweils dem entsprechenden ausgehenden Leitungsanschluß nur eines Informationsanschlusses verbindbar sind und die Übertragungswege jeweils zweier Gruppen über die weiteren Informationsanschlüsse je einer Anschlußeinheit jeder Gruppe einen alle Gruppe durchlaufenden Informationsübertragungsweg bilden, daß bei Feststellung einer Störung des Informationsflusses über alle ausgehenden Leitungsanschlüsse des Schreib-Kanals die Prüfinformation ausgesendet wird, und daß in jeder Anschlußeinheit abhängig von den Informationsanschlüssen, an denen die richtige Prüfinformation empfangen bzw. nicht empfangen wurde, und von dem Inhalt der Prüfinformation sowie abhängig von dem Informationsanschluß, an dem nach Aussendung aller Prüfinformation der Informationsfluß aus einer Synchronisiereinrichtung einer Anschlußeinheit zuerst erscheint, die Detektoreinrichtung die ein- und ausgehenden Leitungsanschlüsse so verbindet, daß mindestens ein über alle Anschlußeinheiten, die untereinander über wenigstens einen Informationsanschluß verbunden sind, verlaufender Informationsübertragungsweg entsteht, wobei diejenige Anschlußeinheit ihre interne Synchronisiereinrichtung mit dem ausgehenden Leitungsanschluß des Schreib-Kanals eines vorbestimmten Informationsanschlusses verbindet, die in keiner Prüfinformation eine kleinere Ordnungsnummer als die eigene empfängt und bei der gleichzeitig alle Übertragungskanäle bzw. Verbindungen des vorbestimmten Informationsanschlusses als intakt ausgewertet wurden.

Dadurch kann selbst in den Fällen, in denen jede Gruppe von Anschlußeinheiten mehrfach unterbrochen ist, noch eine zusammenhängende Anordnung rekonfiguriert werden, sofern jeweils zwei getrennte Teile der einen Gruppe noch Verbindung mit mindestens einem zusammenhängenden Teil der anderen Gruppe haben. Insbesondere ist die Rekonfiguration ohne eine zentrale Einheit dadurch möglich, daß jede Anschlußeinheit ihre eigene Synchronisiereinrichtung enthält, die bedarfsweise entsprechend den Ergebnissen des Prüfvorganges angeschaltet werden kann, und daß dieser Prüfvorgang in jeder Anschlußeinheit unabhängig von den Anschlußeinheiten für alle Informationsanschlüsse durchgeführt wird. Ferner ist durch diese Verwendung der Ordnungsnummer stets eindeutig bestimmbar, welche Anschlußeinheit die Synchronisierinformation liefern muß. Wenn nämlich eine Anschlußeinheit mit drei anderen Anschlußeinheiten verbunden ist und von einer dieser anderen Anschlußeinheiten eine niedrigere Ordnungsnummer als die eigene mit der Prüfinformation übertragen wird, ist für die eine Anschlußeinheit klar, daß sie für die Erzeugung der Synchronisierinformation nicht in Frage kommt. Ob die andere Anschlußeinheit mit der niedrigeren Ordnungsnummer tatsächlich die Erzeugung der Synchronisierinformation übernimmt oder ob eine weitere, daran angeschlossene Anschlußeinheit eine noch niedrigere Ordnungsnummer hat, ist dabei für die zuerst betrachtete Anschlußeinheit nebensächlich. Da jeweils nur für eine Anschlußeinheit zutrifft, daß keine ihr von anderen Anschlußeinheiten übersandte Prüfinformation eine niedrigere Ordnungsnummer aufweist, ist nur diese über diese Tatsache informiert, was jedoch ausreicht. Dabei ist selbstverständlich angenommen, daß benachbarten Anschlußeinheiten Ordnungsnummern in monoton aufsteigender Folge zugeordnet sind.

Eine Weiterbildung der vorstehend angegebenen Anordnung ist dadurch gekennzeichnet, daß jede Anschlußeinheit für jeden eingehenden Leitungsanschluß von Schreib- und Lese-Kanal einen Umschalter aufweist, der von der Detektoreinrichtung gesteuert diesen eingehenden Leitungsanschluß mit einem ausgehenden Leitungsanschluß desselben Kanals nur eines Informationsanschlusses einschließlich des zum betreffenden eingehenden Leitungsanschluß gehörenden Informationsanschlusses verbindet, wobei die Umschalter so geschaltet sind, daß jeder ausgehende Leitungsanschluß mit maximal nur einem eingehenden Leitungsanschluß verbunden ist, daß der ausgehende Leitungsanschluß des Schreib-Kanals eines vorbestimmten Informationsanschlusses von den Ausgängen der Umschalter auf den Ausgang der Synchronisiereinrichtung umschaltbar ist, und daß der ausgehende Leitungsanschluß des Lese-Kanals des vorbestimmten Informationsanschlusses an einen weiteren Umschalter angeschlossen ist, der diesen ausgehenden Leitungsanschluß des Lese-Kanals mit einem eingehenden Leitungsanschluß des

Schreib-Kanals eines der Informationsanschlüsse verbindet. Durch diese Anordnung von Umschaltern ist die Herstellung der notwendigen Verbindungen für die Rekonfiguration besonders schnell möglich.

Die Rekonfiguration einer Anordnung mit Anschlußeinheiten, die mindestens drei Informationsanschlüsse aufweisen und jeweils in Gruppen in einem nahezu geschlossenen Ring miteinander verbunden sind, ist beim Auftreten mehrerer Störungen gleichzeitig über alle noch verbindbaren Anschlußeinheiten etwas zeitaufwendig, und während dieser Zeit stehen auch Teile der ursprünglichen Anordnung noch nicht für eine Informationsübertragung zur Verfügung. Um in diesen Fällen Teilanordnungen möglichst schnell wieder für eine Informationsübertragung bereit zu machen, während die Verbindung der Teilanordnungen untereinander danach erfolgen kann, ist eine andere Ausgestaltung der Erfindung dadurch gekennzeichnet, daß bei mindestens drei Informationsanschlüssen je Anschlußeinheit und Bildung je eines alle Anschlußeinheiten umfassenden Schreib- und Lese-Kanals über zwei ausgewählte Informationsanschlüsse aller Anschlußeinheiten im ungestörten Fall der dritte bzw. weitere Informationsanschluß mindestens eines Teils der Anschlußeinheiten mit einem entsprechenden Informationsanschluß von jeweils weit entfernt liegenden Anschlußeinheiten verbunden ist, daß nach der Feststellung einer Störung des Informationsflusses und dem Aussenden und Auswerten der Prüfinformation für jeweils alle über intakte Verbindungen zwischen den ausgewählten Informationsanschlüssen verbundene Anschlußeinheiten ein diese umfassender Schreib- und Lese-Kanal gebildet wird, wobei die Verbindung der Synchronisiereinrichtung mit dem Schreib-Kanal in der Anschlußeinheit jeweils am Anfang des Schreib-Kanals und die Verbindung zwischen Schreib- und Lese-Kanal in der Anschlußeinheit am Ende des Schreib-Kanals erfolgt, und daß danach über die als intakt festgestellten weiteren Informationsanschlüsse der Anschlußeinheiten Prüfinformationen ausgetauscht werden, die die Ordnungsnummern der zugehörigen Anschlußeinheiten enthalten, in denen die Synchronisiereinrichtung angeschaltet sind, und danach die beiden Gruppen mit den niedrigsten Ordnungsnummern zu einem gemeinsamen Informationsübertragungsweg zusammengeschaltet werden, in dem nur in der Anschlußeinheit mit der insgesamt niedrigsten Ordnungsnummer die Synchronisiereinrichtung angeschaltet ist, und dies so oft wiederholt wird, bis alle Anschlußeinheiten, die wenigstens eine gemeinsame Verbindung haben, zu einem gemeinsamen Schreib- und Lese-Kanal miteinander verbunden sind. Auf diese Weise werden zunächst nur Teilanordnungen zur Informationsübertragung aus miteinander verbundenen Anschlußeinheiten einer Gruppe gebildet, die dann bereits funktionsfähig sind, und die Prüfung der Verbindungen zwischen Teilanordnungen verschiedener Gruppen erfolgt erst danach, wobei ein schrittweiser Aufbau erfolgt. Dadurch wird die Teilanordnung, innerhalb der insgesamt eine Informationsübertragung möglich ist, schrittweise größer, während in den noch nicht angeschlossenen Teilanordnungen eine von den anderen Teilanordnungen unabhängige Informationsübertragung bereits möglich ist.

Ausführungsbeispiele der Erfindung werden nachstehend anhand der Zeichnung näher erläutert. Es zeigen

| | |
|---|---|
| Fig. 1 | eine Anordnung aus Anschlußeinheiten mit nur zwei Informationsanschlüssen, wobei keine Störung vorliegt, |
| Fig. 2 | die Prüfkonfiguration der Anordnung nach Fig. 1 bei Auftreten einer Unterbrechung des Informationsflusses, |
| Fig. 3 | ein Flußdiagramm zur Prüfung des Zustandes der an einen Informationsanschluß einer Anschlußeinheit angeschlossenen Verbindungen, |
| Fig. 4 | eine rekonfigurierte Anordnung der Fig. 1 nach Auftreten einer Störung, |
| Fig. 5 | eine Anordnung mit Anschlußeinheiten, die drei Informationsanschlüsse aufweisen, |
| Fig. 6 | die Prüfkonfiguration von einigen Anordnungen nach Fig. 5 bei Feststellung einer Unterbrechung des Informationsflusses, |
| Fig. 7 | eine Anordnung entsprechend der Fig. 5 nach Rekonfiguration wegen mehrerer gleichzeitig vorliegender Störungsstellen, |
| Fig. 8 | die Anordnung von Umschaltern für die Verbindungsherstellung innerhalb einer Anschlußeinheit zur Durchführung der Rekonfiguration, |
| Fig. 9a bis 9c | die verschiedenen Schritte bei der Rekonfiguration einer Anordnung aus mehreren Anschlußeinheiten mit je drei Informationsanschlüssen. |

In Fig. 1 sind sechs Anschlußeinheiten 11 bis 16 dargestellt, die je zwei Informationsanschlüsse haben, die je über zwei Verbindungen mit benachbarten Anschlußeinheiten verbunden sind. Beispielsweise ist der eine Informationsanschluß der Anschlußeinheit 11 über die Verbindungen 17 und

18 mit einem Informationsanschluß der Anschlußeinheit 12 verbunden, und der andere Informationsanschluß der Anschlußeinheit 11 ist über die Verbindungen 19 und 20 mit der Anschlußeinheit 16 verbunden. Die mit den einzelnen Anschlußeinheiten verbundenen peripheren Geräte, die Informationen aufnehmen und/oder abgeben, sind der Übersichtlichkeit halber nicht dargestellt, da sie für die Erfindung keine Bedeutung haben, Die Richtungen der Informationsflüsse auf den beiden Verbindungen zwischen jeweils zwei Anschlußeinheiten sind jeweils zueinander entgegengesetzt, wie durch die Pfeile auf diesen Verbindungen angegeben ist.

An den Informationsanschlüssen jeder Anschlußeinheit sind ferner nicht dargestellte Eingangsverstärker bzw. Ausgangsverstärker angeordnet. Die Verbindungen zwischen den Anschlußeinheiten brauchen keine elektrischen Verbindungen zu sein, sondern können auch als optische Verbindungen mittels Lichtleiter ausgeführt sein, wobei jeder Eingangsverstärker ein lichtempfindliches Element wie eine Photodiode und jeder Ausgangsverstärker beispielsweise eine Laserdiode enthält. Hierauf wird im folgenden jedoch nicht weiter eingegangen, da es für die Erfindung nicht von Bedeutung ist.

Jede der Anschlußeinheiten 11 bis 16 weist eine Synchronisiereinrichtung 31, 32, 33 usw. zur Erzeugung von Synchronisierinformation auf, die einen ständigen, periodisch Synchronisiersignale aufweisenden Informationsfluß erzeugen. Ferner weist jede Anschlußeinheit drei Schalter bzw. Umschalter auf, nämlich den bei der Anschlußeinheit 11 mit 27 bezeichneten Schalter und die mit 28 und 29 bezeichneten Umschalter. Außerdem ist noch in jeder Anschlußeinheit eine Detektoreinrichtung 21, 22, 23 usw. vorgesehen, wobei die Detektoreinrichtung 21 der Anschlußeinheit 11 den Informationsfluß auf den Verbindungen 17 und 18 überwacht. Ferner ist noch in jeder der Anschlußeinheiten 11 bis 16 eine nicht näher dargestellte Informationsanordnung vorgesehen, die die von den nicht dargestellten peripheren Geräten abzugebenden Informationen auf die zu den anderen Informationseinheiten führenden Verbindungen aufbringt bzw. von den von anderen Anschlußeinheiten kommenden Verbindungen abnimmt und zu den peripheren Geräten überträgt.

In der Anschlußeinheit 11 ist der Umschalter 29 so geschaltet, daß die von der Synchronisiereinrichtung 31 ausgesandte Synchronisierinformation auf der Verbindung 17 zur Anschlußeinheit 12 und von dort nacheinander auf die anderen Anschlußeinheiten 13 bis 16 und schließlich wieder zurück auf die Anschlußeinheit 11 übertragen wird. Die Verbindung 17 sowie die entsprechenden Verbindungen zwischen den anderen Anschlußeinheiten stellen somit einen Schreib-Kanal dar, auf dem Informationen nur geschrieben werden, jedoch noch nicht verarbeitet werden. Die von der Synchronisiereinrichtung 31 ausgesandte Synchronisierinformation markiert eine Anzahl Zeitschlitze in dem Schreib-Kanal, und eine Anschlußeinheit, die eine Nachricht aussenden will, prüft den Schreib-Kanal auf das Vorliegen eines freien Zeitschlitzes und sendet in diesem die Nachricht aus. Auf der bei der Anschlußeinheit 11 ankommenden Leitung 20 liegen also sämtliche, von allen Anschlußeinheiten ausgesandten Nachrichten.

Die Verbindung 20 führt in der Anschlußeinheit 11 auf den Schalter 27, der hier geschlossen ist, und von dort aus über die Verbindung 19 zur Anschlußeinheit 16 und weiter nacheinander auf alle anderen Anschlußeinheiten 15 bis 11. Die hier durchlaufende Information ist vollständig, d.h. es kommt in keiner Anschlußeinheit mehr Information dazu, sondern diese Information wird in den einzelnen Anschlußeinheiten lediglich ausgewertet, d.h. jede Anschlußeinheit prüft, ob eine Nachricht in einem Zeitschlitz mit ihrer eigenen Adresse versehen ist. Die Verbindungen 18, 19 und die entsprechenden, nicht weiter bezeichneten Verbindungen stellen somit den Lese-Kanal dar. Dieser läuft schließlich über die Verbindung 18 zur Anschlußeinheit 11, wo der Umschalter 28 derart geschaltet ist, daß die empfangene Information auf einen Abschluß 30 geführt wird. Bei der Anordnung in Fig. 1 kann also jede Anschlußeinheit zu jeder anderen Anschlußeinheit eine Nachricht übertragen.

Aus Fig. 1 ist zu erkennen, daß grundsätzlich alle Anschlußeinheiten untereinander gleichberechtigt sind, so daß es willkürlich ist, in welcher Anschlußeinheit die Synchronisiereinrichtung mit dem ausgehenden Schreib-Kanal und der eingehende Schreib-Kanal mit dem ausgehenden Lese-Kanal und der eingehende Lese-Kanal mit einem Abschluß versehen ist. Das Auswählen der Anschlußeinheit 11 in Fig. 1 kann beispielsweise bei der Installation der Anordnung erfolgen.

Es wird nun angenommen, daß eine Störung auftritt, und zwar eine Unterbrechung einer der Verbindungen 37 oder 38 oder beide Verbindungen zwischen den Anschlußeinheiten 13 und 14. Bei einer Unterbrechung der Verbindung 37 empfangen die Anschlußeinheiten 14 bis 16 unmittelbar keine Information mehr auf dem Schreib-Kanal. Über den Schalter 27 und die Verbindung 19 gelangt auch keine Information mehr auf den Lese-Kanal, was in dem Fall, wenn nur die Verbindung 37 unterbrochen und die Verbindung 38 intakt ist, von den Anschlußeinheiten 13, 12 und 11 mit einer gewissen Verzögerung festgestellt wird, während nur bei Unterbrechung der Verbindung 38 die letzteren Anschlußeinheiten unmittelbar einen Informationsausfall auf dem Lesekanal feststellen. Im letzteren Falle wird dann in der Anschlußeinheit 11 die Aussendung der Synchronisierinformation von der Synchronisiereinrichtung 31 unterbrochen. Damit wird dann auch den Anschlußeinheiten 14 bis 16 eine Unterbrechung im Lese-Kanal, beispielsweise in der Verbindung 38, mitgeteilt. Somit ist in jedem Falle zumindest nach einer gewissen Zeitverzögerung in jeder Anschlußeinheit erkannt worden, daß eine Störung vorliegt.

Daraufhin nehmen alle Anschlußeinheiten 11 bis 16 den in Fig. 2 dargestellten Zustand ein, d.h. der ausgehende Schreib-Kanal wird in jeder Anschlußeinheit mit der Synchronisiereinrichtung 32 verbunden, die nun jedoch eine Prüfinformation aussendet, die eingehende Leseleitung wird mit dem Abschluß verbunden und die eingehende Schreibleitung mit der ausgehenden Leseleitung. Dadurch entstehen geschlossene Informationswege von jeweils einer Anschlußeinheit über die benachbarte Anschlußeinheit und wieder zurück. Beispielsweise kann die Anschlußeinheit 11 nun prüfen, ob über die Verbindung 18 die von der Synchronisiereinrichtung 31 über die Verbindung 17 ausgesandte Prüfinformation richtig wieder eintrifft, und außerdem kann geprüft werden, ob über den Schalter 27 eine andere Prüfinformation übertragen wird. Wenn dies der Fall ist, ist für die Anschlußeinheit 11 bekannt, daß die Verbindungen 17, 18 und 20 intakt sind.

Es könnte jedoch eine Unterbrechung in der Verbindung 19 vorliegen, die von der Anschlußeinheit 11 nicht ohne weiteres erkannt werden kann. Wenn diese Verbindung jedoch intakt ist, empfängt die Anschlußeinheit 16 ihre ausgesendete Prüfinformation und sendet danach eine Quittungsinformation aus, die von der Anschlußeinheit 11 empfangen wird. Damit ist dann auch für die Anschlußeinheit 11 bekannt, daß die Verbindung 19 intakt ist. Entsprechendes gilt auch für die anderen Anschlußeinheiten.

Der Ablauf der Prüfung der Informationsanschlüsse einer Anschlußeinheit nach Feststellung einer Unterbrechung des Informationsflusses ist in einem Flußdiagramm in Fig. 3 dargestellt. Nach dem Start am Punkt 40, der eine vorgegebene Zeit nach Feststellung der Unterbrechung des Informationsflusses auf dem Schreib-Kanal und/oder Lese-Kanal durchlaufen wird, wird im Block 41 geprüft, ob von einer anderen Anschlußeinheit eine Prüfinformation empfangen wird. Wenn dies der Fall ist, wird im Block 42 die Prüfinformation zurückgesandt, wobei selbstverständlich die Tatsache, daß eine fremde Prüfinformation empfangen wurde, gespeichert wird. Sofern mit der von einer anderen Anschlußeinheit übertragenen Prüfinformation deren Ordnungsnummer mit übertragen wurde, wird auch diese gespeichert.

Als nächstes wird im Block 44 die eigene Prüfinformation ausgesandt. Im Block 45 wird der Ablauf einer vorgegebenen Wartezeit geprüft, die der Zeitverzögerung durch die Übertragung der Prüfinformation über die Verbindungen zur anderen Anschlußeinheit und durch die Verarbeitung darin entspricht. Im Block 46 wird geprüft, ob bis zum Ablauf der Wartezeit die eigene Prüfinformation von der anderen Anschlußeinheit wieder empfangen worden ist. Wenn dies nicht der Fall ist, steht damit fest, daß eine der beiden beteiligten Verbindungen oder die andere Anschlußeinheit eine Störung aufweisen, und der Prüfvorgang wird nach Durchlaufen des Blockes 59, in dem der betreffende Informationsanschluß der Anschlußeinheit als gestört gespeichert wird, beendet. Im Falle der Anschlußeinheit 11 bedeutet dies, daß entweder die Verbindung 17 oder 18 oder die Anschlußeinheit 12 defekt ist. Grundsätzlich gilt jeder Informationsanschluß, an dem nur eine Verbindung gestört ist, als defekt und wird bei der anschließenden Rekonfiguration nicht benutzt.

Falls jedoch im Block 46 die eigene Prüfinformation wieder empfangen wurde, steht damit fest, daß beispielsweise bezogen auf die Anschlußeinheit 11 die Verbindung 17 und 18 sowie der entsprechende Informationsanschluß und der Überbrückungsweg in der Anschlußeinheit 12 intakt ist, während bei positivem Ausgang der Abfrage im Block 41 bereits festgestellt wurde, daß die Verbindung 20 und der entsprechende zugehörige Teil der Anschlußeinheit 16 intakt ist. Wenn auch die Verbindung 19 intakt ist, wird die Anschlußeinheit 16 anschließend eine Quittungsinformation über die Verbindung 20 aussenden, die nach einer entsprechenden Wartezeit in der Anschlußeinheit 11, beispielsweise am Schalter 27, empfangen wird. Diese entsprechende Zeit wird in dem Block 47 abgewartet, und im Block 48 wird geprüft, ob die Quittungsinformation von der anderen Anschlußeinheit eintrifft. Wenn dies nicht der Fall ist, bedeutet dies, daß wie im Falle der Anschlußeinheit 11 die Verbindung 19 unterbrochen ist, d.h. die Anschlußeinheit 16 hat ihre Prüfinformation nicht zurückerhalten und damit auch keine Quittungsinformation ausgesandt. Auch in diesem Falle wird der Ablauf über den Block 59, bei dem nun beispielsweise im Falle der Anschlußeinheit 11 gespeichert wird, daß der Informationsanschluß mit den Verbindungen 19 und 20 nicht intakt ist, beendet.

Falls jedoch im Block 48 die Quittungsinformation von der anderen Anschlußeinheit empfangen wird, wird im Block 49 die eigene Quittungsinformation ausgesandt, damit die entsprechende andere Anschlußeinheit, d.h. im Falle der Anschlußeinheit 11 die Anschlußeinheit 12, darüber informiert wird, daß auch die Verbindung 18 intakt ist, und dann wird der Prüfvorgang über den Block 50 beendet, in dem gespeichert wird, daß beide Informationsanschlüsse, d.h. die daran angeschlossenen Verbindungen und die entsprechenden Teile der benachbarten Anschlußeinheiten, intakt sind.

Falls im Block 41 keine Prüfinformation einer anderen Anschlußeinheit festgestellt wird, d.h. die entsprechende Verbindung ist unterbrochen oder die andere Anschlußeinheit sendet erst etwas später die Prüfinformation aus, wird im Block 51 die eigene Prüfinformation ausgesandt.

Nach Prüfung des Ablaufs einer vorgegebenen Wartezeit im Block 52 entsprechend der Wartezeit im Block 45 wird im Block 53 geprüft, ob die eigene Prüfinformation wieder empfangen wurde. Wenn dies nicht der Fall ist, wird der Prüfvorgang über den Block 59 beendet. Falls die eigene Prüfinformation jedoch wieder empfangen wurde, wodurch festgestellt ist, daß der ausgehende Schreib-Kanal und der eingehende Lese-Kanal sowie die daran angeschlossene andere Anschlußeinheit intakt sind, wird im Block 54 das Eintreffen der Prüfinformation von der anderen Anschlußeinheit erwartet. Wenn diese Prüfinformation nicht eintrifft, steht damit fest, daß der entsprechende Informationsübertragungsweg oder die andere Anschlußeinheit gestört ist, und der Prüfvorgang wird wieder über den Block 59 unter Speicherung dieser Tatsache beendet. Falls jedoch die Prüfinformation von der anderen Anschlußeinheit eingetroffen ist, wird diese im Block 55 zurückgesendet. Anschließend wird die eigene Quittungsinformation in dem Block 56 ausgesandt. Es sei hier der Vollständigkeit halber bemerkt, daß diese Quittungsinformation nicht von der anderen Anschlußeinheit zurückgesendet oder in dieser Anschlußeinheit ausgewertet werden muß, so daß dafür auch kein Verarbeitungsschritt vorgesehen ist.

Im Block 57 wird der Ablauf einer Wartezeit entsprechend der Wartezeit im Block 47 geprüft, der der Zeitverzögerung entspricht, bis die im Block 55 zurückgesandte Prüfinformation eine Quittungsinformation ausgelöst hat, und im Block 58 wird geprüft, ob nach Ablauf dieser Wartezeit die Quittungsinformation von der anderen Anschlußeinheit eingetroffen ist. Wenn dies nicht der Fall ist, ist ebenso wie beim Block 48 damit festgestellt, daß die entsprechende ausgehende Leseleitung gestört ist, und der Prüfvorgang wird über den Block 59 beendet. Falls jedoch die Quittungsinformation von der anderen Anschlußeinheit empfangen ist, wird der Prüfvorgang über den Block 50 beendet, bei dem gespeichert wird, daß alle Informationsanschlüsse bzw. Verbindungen und die entsprechenden Teile der benachbarten Anschlußeinheiten intakt sind.

Abhängig von dem Ergebnis der Prüfung in jeder Anschlußeinheit stellt diese ihre Schalter 27, 28 und 29 ein, so daß eine rekonfigurierte Anordnung entsteht, in der wieder alle Anschlußeinheiten über einen Schreib-Kanal und einen Lese-Kanal miteinander verbunden sind, wie dies in Fig. 4 dargestellt ist. Die Anschlußeinheit 14 hat festgestellt, daß eine der beiden Verbindungen 37 oder 38 oder beide unterbrochen sind, indem sie darüber keine Prüfinformation empfangen hat, und deshalb wird die Synchronisiereinrichtung 34 mit dem ausgehenden Schreib-Kanal verbunden und entsprechend der eingehende Lese-Kanal mit dem Abschluß. Die Anschlußeinheiten 15, 16, 11 und 12 haben jeweils festgestellt, daß die Verbindungen an beiden Informationsanschlüssen intakt sind, so daß in ihnen der Schreib-Kanal und der Lese-Kanal durchgeschaltet ist. Die Anschlußeinheit 13 hat dagegen ebenso wie die Anschlußeinheit 14 festgestellt, daß in den Verbindungen 37 und 38, die für die Anschlußeinheit 13 aber den ausgehenden Schreib-Kanal und den eingehenden Lese-Kanal darstellt, mindestens eine Unterbrechung vorliegt, so daß die Anschlußeinheit 13 nun den Schalter 27 schließt und damit die Verbindung zwischen Schreib-Kanal und Lese-Kanal herstellt. Es ist klar, daß es für die beschriebene Rekonfiguration gleichgültig ist, an welcher Stelle die Unterbrechung auftritt. Es ändert sich dann lediglich die Anschlußeinheit, in der die Synchronisiereinrichtung an den ausgehenden Schreib-Kanal angeschlossen ist. Wenn eine Unterbrechung dadurch auftritt, daß eine Anschlußeinheit defekt wird, beispielsweise der ausgehende Schreib-Kanal oder der eingehende Lese-Kanal der Anschlußeinheit 13, ergeben sich die gleichen Vorgänge. Wenn dagegen die Anschlußeinheit 13 so weitgehend defekt ist, daß die Information auf dem eingehenden Schreib-Kanal nicht über den ausgehenden Lese-Kanal ausgesandt werden kann, erscheint dies für die Anschlußeinheit 12 ebenso, als wenn in der Verbindung zwischen den Anschlußeinheiten 12 und 13 eine Unterbrechung vorliegt, und die Anschlußeinheit 12 übernimmt die für die Anschlußeinheit 13 gezeichnete Schalterstellung, während letztere völlig übergangen wird.

Wenn bei der Anordnung nach Fig. 4 zusätzlich noch eine der Verbindungen 19 oder 20 oder gar beide eine Unterbrechung aufweisen, zerfällt die Anordnung in zwei Teilanordnungen, die jede für sich vollständig funktionsfähig sind, jedoch naturgemäß dann keine Verbindung mehr untereinander haben können.

In Fig. 5 ist eine Anordnung dargestellt, die auch bei mehreren Fehlern in den meisten Fällen eine vollständige Rekonfiguration des Übertragungsweges durch alle Einschlußeinheiten ermöglicht. Diese Anordnung enthält zwei Gruppen von Anschlußeinheiten, nämlich eine erste Gruppe mit den Anschlußeinheiten 61 bis 68 und eine zweite Gruppe mit den Anschlußeinheiten 71 bis 78. Jede der Anschlußeinheiten weist drei Informationsanschlüsse auf, die jedoch nur bei dem Anschlußeinheiten 61 und 71 dargestellt sind, da sie nur dort für die Bildung eines vollständigen Informationsübertragungsweges durch alle Anschlußeinheiten im ungestörten Fall erforderlich sind, von dem in Fig. 5 zunächst ausgegangen wird. Bei den übrigen Anschlußeinheiten 62 bis 68 und 72 bis 78 sind jeweils nur zwei Informationsanschlüsse dargestellt, während tatsächlich der dritte Informationsanschluß beispielsweise der Anschlußeinheit 62 mit dem dritten Informationsanschluß der Anschlußeinheit 78 und entsprechend beispielsweise der dritte Informationsanschluß der Anschlußeinheit 68 mit dem der Anschlußeinheit 72 verbunden ist. Entsprechendes gilt für alle übrigen Anschlußeinheiten.

Jeder Informationsanschluß weist vier Leitungen auf, die jedoch in Fig. 5 nur an dem dritten Informationsanschluß der Anschlußeinheiten 61 und 71 vollständig dargestellt sind. Die Bezeichnungen der vier Leitungen an diesem dritten Informationsanschluß haben folgende Bedeutung, wobei der Index die Nummer des Informationsanschlusses angibt:

- $S_3(S)$ - ausgehende bzw. sendende Leitung des Schreib-Kanals,
- $E_3(S)$ - eingehende bzw. empfangende Leitung des Schreib-Kanals,
- $S_3(L)$ - ausgehende bzw. sendende Leitung des Lese-Kanals,
- $E_3(L)$ - eingehende bzw. empfangende Leitung des Lese-Kanals.

Bei den ersten und zweiten Informationsanschlüssen aller Anschlußeinheiten sind nur jeweils zwei Leitungen dargestellt, und zwar bei dem ersten Informationsanschluß der Anschlußeinheit 61 die Leitungen $S_1$ (S) und $S_1$ (L), die über die Verbindungen 69 und 70 mit den eingehenden Leitungen $E_2(S)$ bzw. $E_2(L)$ der Anschlußeinheit 62 verbunden sind. Die Leitung $S_1$ (S) der Anschlußeinheit 61 ist in dieser mit der Synchronisiereinrichtung 80 verbunden, wobei darauf hingewiesen wird, daß eine derartige Synchronisiereinrichtung in jeder der anderen Anschlußeinheiten vorhanden ist, jedoch dort nicht benutzt wird und deshalb der Einfachheit halber auch nicht dargestellt ist. Der von der Synchronisiereinrichtung 80 ausgehende Informationsübertragungsweg, der über die Verbindung 69 die Anschlußeinheit 62 und dann die weiteren Anschlußeinheiten 63 bis 68 durchläuft und schließlich wieder die Anschlußeinheit 61 über deren eingehende Leitung $E_2(S)$ erreicht, stellt einen Schreib-Kanal dar, der alle Anschlußeinheiten 61 bis 68 der ersten Gruppe miteinander verbindet. Entsprechendes gilt für den Informationsübertragungsweg, der von der Anschlußeinheit 61 über die Leitung $S_1(L)$ ausgeht und über die Verbindung 70 die Anschlußeinheit 62 und die weiteren Anschlußeinheiten 63 bis 68 in der gleichen Richtung wie der Schreib-Kanal durchläuft und schließlich wieder bei der Anschlußeinheit 61 über die Leitung $E_2(L)$ eintrifft, und der einen Lese-Kanal darstellt. Entsprechendes gilt für die zweite Gruppe von Anschlußeinheiten 71 bis 78, wo der von der Leitung $S_1$ (S) der Anschlußeinheit 71 ausgehende und über die Verbindung 79 die Anschlußeinheit 72 und danach alle anderen Anschlußeinheiten 73 bis 78 und wieder die Anschlußeinheit 71 durchlaufende Informationsübertragungsweg den Schreib-Kanal der zweiten Gruppe darstellt und entsprechend der von der Leitung $S_1(L)$ der Anschlußeinheit 71 ausgehende und über die Verbindung 80 alle Anschlußeinheiten dieser Gruppe durchlaufende Übertragungsweg den Lese-Kanal dieser Gruppe darstellt. Der Schreib-Kanal 69 der ersten Gruppe ist in der Anschlußeinheit 61 aufgetrennt und über die Leitung $S_3(S)$ zur Anschlußeinheit 71 der zweiten Gruppe geführt, und entsprechend ist der Schreib-Kanal 79 der zweiten Gruppe in der Anschlußeinheit 71 aufgetrennt, und der rückkehrende Schreib-Kanal wird auf die Leitung $E_3(S)$ der Anschlußeinheit 61 der ersten Gruppe geführt.

Wenn entsprechend den aus den eingangs genannten Druckschriften bekannten Anordnungen die Leitung $E_3(S)$ mit der Leitung $S_1(S)$ innerhalb der Anschlußeinheit 61 gekoppelt würde, entstünde ein vollständig geschlossener Übertragungsweg, über den jede Anschlußeinheit mit jeder anderen Anschlußeinheit der gleichen oder der anderen Gruppe Nachrichten austauschen kann. Der Lese-Kanal 70 bzw. 80 könnte dann als Reserve-Kanal im Falle einer Rekonfiguration aufgrund von Störungen verwendet werden, wobei dann allerdings die Informationsrichtung in umgekehrter als der dargestellten Richtung verlaufen müßte. In diesem Falle wären nur jeweils zwei Leitungen je Informationsanschluß bei jeder Anschlußeinheit erforderlich.

Im folgenden wird jedoch davon ausgegangen, daß Lese-Kanal und Schreib-Kanal getrennt sind, wie dies auch bereits für die Fig. 1 beschrieben wurde. Dafür wird der Schreib-Kanal, nachdem er alle Anschlußeinheiten mindestens einmal durchlaufen hat, wenn er an der Leitung $E_3(S)$ ankommt, in der Anschlußeinheit 61 mit dem ausgehenden Lese-Kanal $S_1(L)$ verbunden, d.h. mit dem Lese-Kanal, der dann ebenfalls alle Anschlußeinheiten mindestens einmal durchläuft. Wenn der Lese-Kanal dann über die Leitung $E_3(L)$ wieder in der Anschlußeinheit 61 eintrifft, führt er dort auf einen Abschluß.

Es ist klar, daß in Fig. 5 außer den nicht dargestellten Verbindungen der dritten Anschlüsse der Anschlußeinheiten 62 bis 68 und 72 bis 78 auch die ersten und zweiten Informationsanschlüsse nicht dargestellte Leitungen aufweisen, und zwar parallel zum Schreib-Kanal 69 bis 79 und parallel zum Lese-Kanal 70 bis 80, wobei eine Informationsübertragung in diesen nicht dargestellten Leitungen nur im Störungsfall erforderlich ist und dann in entgegengesetzter Richtung wie beim Schreib-Kanal 69, 79 und beim Lese-Kanal 70, 80 erfolgt.

Falls bei der Anordnung nach Fig. 5 eine Störung durch eine Unterbrechung einer Verbindung oder auch durch einen Defekt in einer Anschlußeinheit auftritt, der eine Unterbrechung des von der Synchronisiereinrichtung 80 ausgesandten Informationsflusses zur Folge hat, wird dies in allen Anschlußeinheiten erkannt, wobei lediglich eine Zeitverzögerung beim Erkennen in Abhängigkeit vom Fehlerort auftritt, und alle Anschlußeinheiten gehen dann in einen Prüfzustand, der in Fig. 6 dargestellt ist.

In der Fig. 6 sind vier Anschlußeinheiten dargestellt, von denen die Anschlußeinheiten 66 und 67 zur ersten Gruppe und die Anschlußeinheiten 73 und 74 zur zweiten Gruppe gehören. Hier sind auch alle vier Verbindungen jedes Informationsanschlusses dieser Anschlußeinheiten untereinander und mit den benachbarten, nicht dargestellten Anschlußeinheiten vollständig dargestellt. In jedem der Verbindungsbündel 86 bis 89 führt eine ausgehende Schreibleitung $S_x(S)$ auf die eingehende Schreibleitung $E_x(S)$ der anderen Anschlußeinheit, und die ausgehende Leseleitung $S_x(L)$ führt auf die eingehende Leseleitung $E_x(L)$ der anderen Anschlußeinheit, wobei der Index x die Nummer des Informationsanschlusses angibt und der erste Informationsanschluß einer Anschlußeinheit mit dem zweiten Informationsanschluß der anderen Einheit und die dritten Informationsanschlüsse jeweils zweier Anschlußeinheiten miteinander verbunden sind. Um die angegebenen Verbindungen der einzelnen Leitungen zu realisieren, tritt in der Verbindung der dritten Informationsanschlüsse eine Doppelkreuzung von Verbindungen auf, wie in dem Verbindungsbündel 88 und 89 angegeben, während bei dem Verbindungsbündel 86 und 87 keine Kreuzung der einzelnen Verbindungen auftritt, da die Reihenfolge der Leitungen am zweiten Informationsanschluß jeweils anders gewählt ist als die Reihenfolge der Leitungen am ersten Informationsanschluß.

In jeder Anschlußeinheit ist bei allen drei Informationsanschlüssen die ausgehende Schreibleitung $S_x(S)$ mit der Synchronisiereinrichtung 81, 82, 83 bzw. 84 verbunden und die eingehende Leseleitung $E_x(L)$ auf einen Abschluß geführt. Ferner ist in jeder Anschlußeinheit an jedem Informationsanschluß die eingehende Schreibleitung $E_x(S)$ mit der ausgehenden Leseleitung $S_x(L)$ verbunden. Dadurch einfängt jede Anschlußeinheit die über eine ausgehende Schreibleitung $S_x(S)$ ausgesandte Prüfinformation auf der eingehenden Leseleitung $E_x(L)$ des selben Informationsanschlusses wieder zurück, wenn die beiden entsprechenden Verbindungen intakt sind. Ferner wird an jeder eingehenden Schreibleitung $E_x(S)$ eine Prüfinformation von einer anderen Anschlußeinheit empfangen, wenn die betreffende Verbindung intakt ist, und diese wird über die ausgehende Leseleitung $S_x(L)$ zurückgesandt. Insgesamt ergibt sich für jeden Informationsanschluß ein Prüfablauf, wie dieser anhand der Fig. 3 beschrieben wurde. Nach Abschluß des Prüfvorganges ist in allen Anschlußeinheiten der Zustand aller vier Verbindungen an jedem Informationsanschluß bekannt, beispielsweise für die Anschlußeinheit 66 der Zustand aller Verbindungen in den Verbindungsbündeln 85, 86 und 89. In dem Zustand der Verbindungen ist der Zustand der beiden durch die Verbindungen verbundenen Anschlußeinheiten bzw. der betreffende Teil eingeschlossen. Außerdem ist nach Abschluß des Prüfvorganges für jede Anschlußeinheit bekannt, ob eine der benachbarten Anschlußeinheiten eine höhere oder eine niedrigere Ordnungsnummer hat.

Nachdem nun alle Anschlußeinheiten über den Zustand der Verbindungen an allen drei Informationsanschlüssen informiert sind, können die endgültigen Durchschaltungen der einzelnen Leitungen der drei Informationsanschlüsse noch nicht vollständig erfolgen, sondern es kommt auch noch darauf an, in welcher Reihenfolge anschließend die erste Synchronisierinformation an welchen Informationsanschlüssen eintrifft. Diese Synchronisierinformation wird von derjenigen Anschlußeinheit erzeugt, bei der mindestens der erste Informationsanschluß intakt ist und die die niedrigste Ordnungsnummer hat, d.h. keine benachbarte Anschlußeinheit mit einer niedrigeren Ordnungsnummer gefunden hat. In dieser Anschlußeinheit wird dann die Synchronisiereinrichtung mit der Leitung $S_1(S)$ verbunden. Die darüber ausgesandte Synchronisierinformation durchläuft nun eine Folge von Anschlußeinheiten, deren Anzahl und deren Aufeinanderfolge von der Lage der aufgetretenen Störstellen abhängt, und kehrt davon abhängig auf der eingehenden Leitung des Schreibkanals einer der Informationsanschlüsse an die Einheit zurück, die die Synchronisierinformation erzeugt. Dies kann selbstverständlich nur ein intakter Informationsanschluß sein. Dabei kann jedoch der Fall auftreten, daß das Zurückkehren der Synchronisierinformation erfolgt, bevor diese alle Anschlußeinheiten, die noch mit mindestens einem Informationsanschluß miteinander zusammenhängen, durchlaufen hat, so daß dann die wieder zurückgekehrte Synchronisierinformation über eine ausgehende Leitung eines Informationsanschlusses zu den restlichen Anschlußeinheiten ausgesendet werden muß. Wenn dagegen die Synchronisierinformation in der diese erzeugende Anschlußeinheit zurückkehrt, nachdem sie alle Anschlußeinheiter durchlaufen hat, wird sie in der die Synchronisierinformation erzeugenden Anschlußeinheit auf den Lesekanal gegeben. Diese verschiedenen Bedingungen werden in der die Synchronisierinformation erzeugenden Anschlußeinheit lediglich dadurch erkannt, an welchem Informationsanschluß in welcher Reihenfolge die Synchronisierinformation auf einer eingehenden Schreibleitung eintrifft. Nachfolgend sind die im einzelnen durchzuführenden Durchschaltungen innerhalb der die Synchronisierinformation erzeugenden Anschlußeinheit aufgeführt, wobei der Pfeil angibt, welche eingehende Leitung mit welcher ausgehenden Leitung zu verbinden ist, wobei der Übersichtlichkeit halber nur die Leitungen des Schreibkanals angegeben sind, da die entsprechenden Leitungen des Lesekanals in genau gleicher Weise durchgeschaltet werden, lediglich an der Stelle, an der der eingehende Schreibkanal mit dem ausgehenden Lesekanal verbunden wird, wird der eingehende Lesekanal mit einem Abschluß verbunden.

1. Zunächst wird angenommen, daß alle drei Informationsanschlüsse der die Synchronisierinformation erzeugenden Anschlußeinheit intakt sind.

1a) Wenn die erste Synchronisierinformation zuerst auf den eingehenden Leitungen $E_1(S)$ oder $E_2(S)$ zurückkehrt:

$E_1(S) \rightarrow S_2(S)$
$E_2(S) \rightarrow S_3(S)$
$E_3(S) \rightarrow S_1(L)$

1b) Wenn die erste Sychronisierinformation zuerst auf der eingehenden Leitung $E_3(S)$ zurückkehrt, wird diese mit der ausgehenden Leitung $S_2(S)$ verbunden. Das Eintreffen der Synchronisierinformation an einem solchen Eingang ist jedoch ein Zeichen, daß noch nicht alle möglichen Anschlußeinheiten durchlaufen sind, sondern daß die erste Synchronisierinformation ein weiteres Mal bei der diese erzeugenden Anschlußeinheit eintrifft. Sobald dies der Fall ist, wird der betreffende Eingang, an dem die Synchronisierinformation ein zweites Mal eintrifft, mit dem ausgehenden Lesekanal verbunden. Die jeweils andere eingehende Schreibleitung, an der dann also keine Synchronisierinformation mehr eintrifft und die dann in dem gesamten Informationsweg nicht eingeschlossen ist, kann auf einen Abschluß geführt werden, um definierte Verhältnisse herzustellen. Im einzelnen ergeben sich also schließlich folgende Durchschaltzustände:

1b1) Wenn die Synchronisierinformation über die Leitung $E_2(S)$ ein zweites Mal eintrifft,

$E_3(S) \rightarrow S_2(S)$
$E_2(S) \rightarrow S_1(L)$
$E_1(S) \rightarrow$ Abschluß

1b2) wenn die Synchronisierinformation über die Leitung $E_1(S)$ ein zweites Mal eintrifft,

$E_3(S) \rightarrow S_2(S)$
$E_1(S) \rightarrow S_1(L)$
$E_2(S) \rightarrow$ Abschluß

2. Es ist nun auch zulässig und daher auch bei entsprechender Verteilung der Störungsstellen möglich, daß bei der die Synchronisierinformation liefernden Anschlußeinheit von dem zweiten und dritten Informationsanschluß einer defekt ist, was in dieser Anschlußeinheit jedoch aus dem Prüfvorgang bekannt ist. In diesem Falle ist bereits in dem Augenblick, in dem die Synchronisierinformation zum ersten Mal wieder bei der diese erzeugenden Anschlußeinheit auf der eingehenden Leitung eines der beiden intakten Informationsanschlüsse eintrifft, eindeutig festgelegt, daß sie auf der eingehenden Leitung des Schreibkanals des anderen Informationsanschlusses ein zweites Mal eintreffen muß, so daß die durchzuschaltenden Informationswege gleichzeitig bestimmt sind. Im Einzelfall ist durchzuschalten

2a) falls der Informationsanschluß 3 defekt ist und

2a1) wenn die Synchronisierinformation auf der eingehenden Leitung $E_1(S)$ zuerst eintrifft

$E_1(S) \rightarrow S_2(S)$
$E_2(S) \rightarrow S_1(L)$

2a2) oder wenn die Synchronisierinformation zuerst an der eingehenden Leitung $E_2(S)$ eintrifft

$E_2(S) \rightarrow S_2(S)$
$E_1(S) \rightarrow S_1(L)$

2b) falls der Informationsanschluß 2 defekt ist und

2b1) die Synchronisierinformation auf der Leitung $E_1(S)$ zuerst eintrifft

$E_1(S) \rightarrow S_3(S)$
$E_3(S) \rightarrow S_1(L)$

2b2) oder wenn die Synchronisierinformation auf der Leitung $E_3(S)$ zuerst eintrifft

$E_3(S) \rightarrow S_3(S)$
$E_1(S) \rightarrow S_1(L)$

2c) falls sowohl der zweite als auch der dritte Informationsanschluß defekt ist, ist der durchzuschaltende Informationsweg von vornherein festgelegt

$E_1(S) \rightarrow S_1(L)$.

Damit sind alle Kombinationen von Zuständen berücksichtigt, die an der die Synchronisierinformation erzeugenden Anschlußeinheit auftreten können, und für jeden Zustand ergibt sich schließlich eine eindeutige Durchschaltung der Informationswege.

In ähnlicher Weise werden bei den übrigen Anschlußeinheiten, die nicht die Synchronisierinformation erzeugen, die durchzuschaltenden Informationswege bestimmt, und zwar spätestens beim ersten Eintreffen der Synchronisierinformation, sofern nicht im Falle von Defekten an Informationsanschlüssen die durchzuschaltenden Informationswege unmittelbar festliegen.

3. Wenn alle Informationsanschlüsse intakt sind

3a) und die Synchronisierinformation zuerst auf der Leitung $E_2(S)$ eintrifft

$E_2(S) \rightarrow S_1(S)$

$E_1(S) \rightarrow S_3(S)$

$E_3(S) \rightarrow S_2(S)$

3b) Wenn jedoch auf einer der Leitungen $E_1(S)$ oder $E_3(S)$ die Synchronisierinformation zuerst erscheint,

$E_1(S) \rightarrow S_2(S)$

$E_2(S) \rightarrow S_3(S)$

$E_3(S) \rightarrow S_1(S)$

4. Wenn jedoch Informationsanschlüsse defekt sind, finden folgende Durchschaltungen von Informationswegen statt

4a) bei einem Defekt von Informationsanschluß 1

$E_2(S) \rightarrow S_3(S)$

$E_3(S) \rightarrow S_2(S)$

4b) bei einem Defekt von Informationsanschluß 2

$E_1(S) \rightarrow S_3(S)$

$E_3(S) \rightarrow S_1(S)$

4c) bei einem Defekt von Informationsanschluß 3

$E_1(S) \rightarrow S_2(S)$

$E_2(S) \rightarrow S_1(S)$

4d) falls nur einer der Informationsanschlüsse intakt ist, wird an diesem die eingehende Schreibleitung mit der ausgehenden Schreibleitung verbunden

$E_x(S) \rightarrow S_x(S)$.

Damit sind für alle vorkommenden Kombinationen von Zuständen der Informationsanschlüsse die durchzuschaltenden Informationsverbindungen eindeutig festgelegt, wobei, wie bereits ausgeführt, die Leitungen der Lesekanäle in gleicher Weise wie die Leitungen der Schreibkanäle durchgeschaltet werden.

In Fig. 7 ist die Anordnung nach Fig. 5 nochmals dargestellt, jedoch die Verbindungen der einzelnen Anschlußeinheiten und die dadurch entstehenden Informationsübertragungswege nach der Rekonfiguration, die durch Störungen ausgelöst wurde, die an den mit Kreuzen bezeichneten Stellen aufgetreten sind. Der Einfachheit halber wird auch angenommen, daß die den Anschlußeinheiten zugeordneten Ordnungsnummern gleich deren Bezugszeichen sind.

Da die Anschlußeinheit 61 die niedrigste Ordnungsnummer hat und an ihrem ersten Informationsanschluß keine Störung aufgetreten ist, bleibt diese Anschlußeinheit weiterhin diejenige, in der die Synchronisiereinrichtung 80 die Synchronisierinformation erzeugt. Ferner ist der Fig. 7 zu entnehmen, daß auch der zweite und dritte Informationsanschluß der Anschlußeinheit 61 intakt ist. Damit gelten die unter Punkt 1 angegebenen Bedingungen für die Durchschaltung der Informationswege innerhalb der Anschlußeinheit 61, d.h. es muß zunächst abgewartet werden, an welchem Informationsanschluß die Synchronisierinformation zuerst wieder erscheint.

Zunächst wird die über die Leitung $S_1(S)$ ausgesandte Synchronisierinformation dem Eingang $E_2(S)$ der Anschlußeinheit 62 zugeführt. Da bei dieser angenommen ist, daß der dritte Informationsanschluß gestört ist, d.h. die Verbindung zur Anschlußeinheit 78, trifft für die Anschlußeinheit 62 die Durchschaltbedingung 4c zu, d.h. alle Leitungen des zweiten Informationsanschlusses sind mit den entsprechenden Leitungen des ersten Informationsanschlusses verbunden. Von der Leitung $S_1(S)$ der Anschlußeinheit 62 geht die Synchronisierinformation dann zum Anschluß $E_2(S)$ der Anschlußeinheit 63, bei der jedoch der Informationsanschluß 1 gestört ist. Deshalb trifft für diese Anschlußeinheit die Bedinung 4a zu, d.h. alle Leitungen des zweiten Informationsanschlusses sind mit den entsprechenden Leitungen des dritten Informationsanschlusses verbunden. Dadurch wird die Sychronisierinformation von der Anschlußeinheit 63 über die Leitung $S_3(S)$ der Leitung $E_3(S)$ der Anschlußeinheit 77 zugeführt. Da an dieser Anschlußeinheit sowohl der erste als auch der zweite Informationsanschluß defekt ist, trifft hierfür die Durchschaltbedingung 4d zu, so daß die Synchronisierinformation über die Leitung $S_3(S)$ der Anschlußeinheit 77 über die Anschlußeinheiten 63 und 62 zur Leitung $E_1(S)$ der Anschlußeinheit 61 zurückkehrt. Damit trifft für die Anschlußeinheit 61 die Durchschaltbedingung 1a zu, d.h. die wieder zurückgekehrte Synchronisierinformation wird über die Leitung $S_2(S)$ der Anschlußeinheit 68 zugeführt.

In entsprechender Weise lassen sich die Durchschaltbedingungen für die anderen Anschlußeinheiten finden, woraus sich schließlich die in Fig. 7 dargestellten Informationsübertragungswege ergeben. Wie daraus zu ersehen ist, ergibt sich ein vollständiger Schreibkanal, der von der Anschlußeinheit 61 ausgeht, nach Rückkehr auf der Leitung $E_1(S)$ diese einmal und danach noch ein weiteres Mal durchläuft und schließlich von der Anschlußeinheit 71 auf der Leitung $E_3(S)$ zur Anschlußeinheit 61 zurückkehrt, wo der Schreibkanal endet und mit dem Anfang des Lesekanals verbunden wird, der über den Ausgang $S_1(L)$ beginnt und alle Anschlußeinheiten parallel zum Schreibkanal durchläuft. Mit den angegebenen Durchschaltbedingungen ist es also möglich, selbst bei einer großen Zahl von Störstellen eine Rekonfiguration der Anordnung zu erreichen, bei der alle Anschlußeinheiten in den gemeinsamen Informationsübertragungsweg einbezogen sind, die über wenigstens einen Informationsanschluß Verbindung mit anderen Anschlußeinheiten haben. Erst bei bestimmten Störungen,

beispielsweise in der Verbindung zwischen den Anschlußeinheiten 62 und 63, kann von letzterer nur eine Verbindung zur Anschlußeinheit 77 hergestellt werden, so daß zwischen diesen beiden Anschlußeinheiten Nachrichten ausgetauscht werden können, jedoch ist in diesem Falle keine Verbindung zu den übrigen Anschlußeinheiten mehr möglich.

Eine entsprechende Rekonfiguration eines möglichst viele Anschlußeinheiten umfassenden Übertragungsweges ist beispielsweise auch möglich, wenn im fehlerfreien Fall zunächst zwei völlig getrennte Gruppen von Anschlußeinheiten vorhanden sind, von denen die eine Gruppe beispielsweise der Übertragung von Daten und die andere Gruppen der Übertragung von digitalisierter Sprachinformation dient. Die in Fig. 5 zwischen den Anschlußeinheiten 61 und 71 vorhandene Verbindung wird also zunächst nicht benutzt, sondern in der Anschlußeinheit 61 ist zunächst die eingehende Leitung $E_2(S)$ des Schreib-Kanals mit der abgehenden Leitung $S_1(L)$ des Lese-Kanals verbunden, und die Anschlußeinheit 71 ist in genau gleicher Weise geschaltet. Erst wenn durch einen mehrfachen Fehler in mindestens einer der Gruppen keine Informationsübertragung zwischen allen Anschlußeinheiten mehr möglich ist, werden die Verbindungen der Anschlußeinheiten verschiedener Gruppen über die dritten Informationsanschlüsse verwendet, um in der beschriebenen Weise einen alle Anschlußeinheiten umfassenden Informationsweg zu schaffen, über den dann sowohl Daten als auch digitalisierte Sprache übertragen wird.

Eine Anordnung von Umschaltern innerhalb einer Anschlußeinheit, mit denen die beschriebene Durchschaltung der einzelnen Übertragungswege auf einfache Weise erreicht werden kann, ist in Fig. 8 dargestellt. Dabei ist innerhalb der Anschlußeinheit A alles weggelassen, was nicht für die folgende Erklärung erforderlich ist, so daß außer den Schaltern nur die Synchronisiereinrichtung Sy gezeichnet ist.

In dem Block SS sind die Schalter dargestellt, die die Verbindungen für die Informationswege des Schreib-Kanals herstellen, und im Block LS sind die Schalter enthalten, die die Verbindungen für die Informationswege des Lese-Kanals herstellen. Der Block SL enthält den Umschalter, der eine eingehende Leitung des Schreib-Kanals mit dem Beginn des Lese-Kanals verbindet bzw. keine Verbindung herstellt. Die Schalter SP1 und SP2 dienen für die Durchschaltung der Prüfinformation. Ferner ist für jede der eingehenden Leitungen $E_x(S)$ aller drei eingehenden Leitungen des Schreib-Kanals ein Schreib-Kanal-Abschlußschalter SA1, SA2 und SA3 vorgesehen, der die betreffende eingehende Leitung mit einem Abschluß verbindet, um Hochfrequenzstörungen von offenen Leitungen zu vermeiden. Entsprechend ist auch für jede eingehende Leitung $E_x(L)$ des Lese-Kanals ein Lese-Kanal-Abschlußschalter LA1, LA2 und LA3 vorgesehen, der die betreffende eingehende Leitung mit einem Abschluß verbindet. Diese Abschlußschalter können geschlossen werden, wenn über die betreffende eingehende Leitung aufgrund des jeweiligen Durchschaltzustandes der anderen Schalter keine Information eingeht bzw. bei der eingehenden Leitung des Lese-Kanals die Information nicht weitergesendet werden soll. Alle Schalter sind im übrigen als elektronische Schalter ausgeführt.

Die ausgehende Sendeleitung $S_1(S)$ ist mit dem Schalter SG verbunden, der in der Stellung a diese Leitung mit den Anschlüssen a der Umschalter SS1, SS2 und SS3 verbindet. Der Schalter SS1 verbindet in der Stellung a die abgehende Schreibleitung $S_1(S)$ mit der eingehenden Schreibleitung $E_1(S)$ des selben Informationsanschlusses, der Schalter SS2 verbindet in der Stellung a die abgehende Leitung $S_1(S)$ des Schreib-Kanals mit der eingehenden Leitung $E_2(S)$ des Schreib-Kanals des Informationsanschlusses 2, und entsprechend verbindet der Schalter SS3 in der Stellung a die abgehende Leitung $S_1(S)$ des Schreib-Kanals mit der eingehenden Leitung $E_3(S)$ des Schreib-Kanals des dritten Informationsanschlusses. Jeweils einer der Schalter SS1 bis SS3 kann jeweils nur in der Stellung a stehen. In den anderen Stellungen verbinden diese Schalter die abgehenden Leitungen des Schreib-Kanals der anderen beiden Informationsanschlüsse jeweils mit einer eingehenden Leitung des Schreib-Kanals eines der Informationsanschlüsse. Entsprechend verbinden die die Schalter LS1 bis LS3 in der Stellung a die abgehende Leitung $S_1(L)$ des Lese-Kanals mit einer eingehenden Leitung des Lese-Kanals einer der Informationsanschlüsse. Auch hier können die drei Schalter niemals gleichzeitig in der gleichen Stellung stehen.

Der Schalter SL verbindet die ausgehende Leitung $S_1(L)$ des Lese-Kanals des ersten Informationsanschlusses mit einem der eingehenden Leitungen $E_x(S)$ des Schreib-Kanals einer der Informationsanschlüsse oder in der Stellung d mit keiner der eingehenden Leitungen des Schreib-Kanals. In diesem Falle ist die ausgehende Leitung $S_1(L)$ des Lese-Kanals über die Schalter LS1 bis LS3 mit einer eingehenden Leitung des Lese-Kanals eines der Informationsanschlüsse verbunden. Eine Verbindung der ausgehenden Leitung $S_1(L)$ mit mehreren Quellen wird dadurch vermieden, daß bei einer der Stellungen a bis c des Schalters SL der Eingang desjenigen Schalters LS1 bis LS3, der dann in der Stellung a steht, durch den betreffenden Schalter LAx von der entsprechenden eingehenden Leitung des Lese-Kanals getrennt ist.

In der Stellung b des Umschalters SG ist die

Synchronisiereinrichtung Sy mit der ausgehenden Leitung $S_1$(S) des Schreib-Kanals des ersten Informationsanschlusses verbunden. Dies ist die normale Stellung, wenn die betreffende Anschlußeinheit A die Synchronisierinformation erzeugen soll. Diese Stellung b des Schalters SG wird auch eingestellt, wenn Prüfinformation ausgesandt werden soll. Ferner werden dann die Schalter SP1 und SP2 geschlossen, wodurch über die ausgehenden Leitungen $S_2$(S) und $S_3$(S) der Schreib-Kanäle der beiden anderen Informationsanschlüsse ebenfalls Prüfinformation ausgesandt wird, und ferner wird an jedem Informationsanschluß die eingehende Leitung $E_x$(S) des Schreib-Kanals mit der ausgehenden Leitung $S_x$(L) des Lese-Kanals verbunden. Damit entsteht die in Fig. 6 dargestellte Prüfkonfiguration.

Auf diese Weise können einfach die Verbindungen aller erforderlichen Informationswege hergestellt werden. Die Steuerung der einzelnen Schalter erfolgt durch eine nicht dargestellte Steueranordnung, die zweckmäßig als Microcomputer ausgebildet sein kann.

Eine andere Möglichkeit, eine Anordnung mit Anschlußeinheiten mit je drei Informationsanschlüssen im Fehlerfall wieder so zu rekonfigurieren, daß ein alle noch verbundenen Anschlußeinheiten umfassender Schreib- und Lese-Kanal entsteht, ist in den Figuren 9a bis 9c dargestellt. In Fig. 9a sind zwölf Anschlußeinheiten 90 bis 101 dargestellt, die zunächst vor Auftreten eines Fehlers alle über die Verbindungen zwischen den Informationsanschlüssen 1 und 2 so miteinander verbunden waren, daß sich ein alle Anschlußeinheiten 90 bis 101 umfassender Schreib-Kanal, der hier ausgezogen gezeichnet ist, und ein entsprechender Lese-Kanal, der hier gestrichelt gezeichnet ist, ergibt. Dafür waren also Schreib-Kanal und Lese-Kanal in der Anschlußeinheit 93 zu den Leitungen 102 am Informationsanschluß 1 durchgeführt, wobei die Leitungen 102 mit den Leitungen 103 am Informationsanschluß 2 der Anschlußeinheit 94 verbunden waren. In dieser Anschlußeinheit 94 waren ebenfalls die Schreibleitung und Leseleitung zum Informationsanschluß 1 durchverbunden, und in entsprechender Weise auch bei der Anschlußeinheit 97, deren Leitungen 104 am Informationsanschluß 1 mit den Leitungen 105 am Informationsanschluß 2 der Anschlußeinheit 98 verbunden waren. In entsprechender Weise waren die Leitungen 106 der Anschlußeinheit 101 mit den Leitungen 107 der Anschlußeinheit 90 verbunden, wobei in irgendeiner Anschlußeinheit die Synchronisiereinrichtung an die Schreibleitung und die Leseleitung an einen Abschluß geschaltet waren, während in dieser oder in der vorhergehenden Anschlußeinheit die Verbindung zwischen Schreib-Kanal und Lese-Kanal vorhanden war. Insgesamt wird von einer Anordnung ausgegangen, wie sie im Prinzip in Fig. 1 dargestellt ist, wobei tatsächlich noch mehr Anschlußeinheiten vorhanden sein können, die beispielsweise den Leitungen 102, 104 bzw. 106 nachgeschaltet sein können, so daß sich eine entsprechend größere, jedoch weiterhin einfache Schleife für Schreib- und Lese-Kanal ergibt.

In Fig. 9a ist nun angenommen, daß die Verbindungen zwischen den Leitungen 102 und 103, 104 und 105 sowie 106 und 107 durch eine Störung unterbrochen oder so gestört sind, daß keine ordnungsgemäße Informationsübertragung darüber erfolgen kann. Jede Anschlußeinheit stellt diese Fehler wieder durch Unterbrechung des Informationsflusses auf Schreib- und Lese-Kanal fest und sendet über mindestens die ersten und zweiten Informationsanschlüsse Prüfinformationen aus. Nach Aussendung und Auswertung der Prüfinformation schalten sich jeweils die Anschlußeinheiten, die über den ersten und/oder zweiten Informationsanschluß mit einer anderen Anschlußeinheit verbunden sind, jeweils zu einer eigenen Teilanordnung zusammen, insbesondere in der Art und Weise, die anhand der Figuren 2 bis 4 beschrieben wurde. Dabei wird also jeweils in der Anschlußeinheit, an deren Informationsanschluß 1 die äußeren Verbindungen intakt sind und an deren Informationsanschluß 2 die äußeren Verbindungen gestört sind, der Schreib-Kanal mit der Synchronisiereinrichtung und der Lese-Kanal mit einem Abschluß verbunden, wie bei den Anschlußeinheiten 90, 94 und 98 dargestellt ist, und in denjenigen Anschlußeinheiten, bei denen am Informationsanschluß 1 die äußere Verbindung gestört ist und am Informationsanschluß 2 die äußere Verbindung intakt ist, wird der Schreib-Kanal mit dem Lese-Kanal verbunden. Damit ergibt sich die in Fig. 9a dargestellte Verbindung der Anschlußeinheiten untereinander, wobei über die Informationsanschlüsse 3 noch keine Informationen übertragen werden, so daß sich drei Teilanordnungen ergeben, innerhalb derer die Anschlußeinheiten untereinander Nachrichten austauschenkönnen, jedoch keine Nachrichten mit Anschlußeinheiten aus einer anderen Teilanordnung.

Um dies zu ermöglichen, tauschen alle Anschlußeinheiten über die Verbindung ihrer Informationsanschlüsse 3 Prüfinformationen aus, die jeweils die Ordnungsnummer derjenigen Anschlußeinheit in den Teilanordnungen enthält, in der der Schreib-Kanal mit der Synchronisiereinrichtung verbunden ist, denn diese Ordnungsnummer ist allen Anschlußeinheiten jeder Teilanordnung über den bereits rekonfigurierten Schreib-Kanal mitgeteilt worden. Dabei wird angenommen, daß zwischen den Anschlußeinheiten 92 und 96 sowie 95 und 99 jeweils über die dritten Anschlüsse eine intakte Verbindung 108 bzw. 109 festgestellt wird, wobei

die dritten Anschlüsse der anderen Anschlußeinheiten beispielsweise ebenfalls gestört sein können oder es sind einige von ihnen zur Verringerung des Aufwandes für die Verbindungen nicht angeschlossen. Dies hängt vom jeweiligen Anwendungsfall und der Wahrscheinlichkeit für das Auftreten von Störungen an bestimmten Stellen ab. Der Austausch von Prüfinformation über die Informationsanschlüsse 3 kann ohne Behinderung der Informationsübertragung auf den über die Informationsanschlüsse 1 und 2 bestehenden Schreib- und Lese-Kanäle erfolgen.

Bei der Auswertung der Prüfinformation kann es insbesondere dann, wenn eine Teilanordnung einen großen Teil der insgesamt vorhandenen Anschlußeinheiten umfaßt, geschehen, daß bei einzelnen Anschlußeinheiten in der Prüfinformation die gleiche Ordnungsnummer enthalten ist, woraus sich ergibt, daß diese Anschlußeinheiten zur selben Teilanordnung gehören und über die Informationsanschlüsse 1 und 2 bereits miteinander verbunden sind.

Diese Anschlußeinheiten arbeiten dann bei der weiteren Rekonfiguration der gesamten Anordnung nicht weiter mit. Falls jedoch eine Anschlußeinheit über die am Informationsanschluß 3 empfangene Prüfinformation eine andere Ordnungsnummer empfangen hat, und dies gilt in der Fig. 9a für die Anschlußeinheiten 92, 95, 96 und 99, wird diese Ordnungsnummer der Anschlußeinheit, in der die Synchronisiereinrichtung an den Schreib-Kanal angeschaltet ist, über den bereits bestehenden Schreib- und Lese-Kanal mitgeteilt. Somit ist in jeder der Anschlußeinheit 90, 94 und 98 bekannt, welche Ordnungsnummern den benachbarten Teilanordnungen zugeordnet sind.

Falls eine Teilanordnung eine Ordnungsnummer mit höherer Priorität, also beispielsweise eine niedrigere Ordnungsnummer als die eigene, empfangen hat, sendet diese Teilanordnung über die dem Anfang des Schreib-Kanals am nächsten liegende Anschlußeinheit eine Quittung an die Teilanordnung mit der niedrigsten Ordnungsnummer aus. Damit wird berücksichtigt, daß eine Teilanordnung über mehrere Anschlußeinheiten mit der selben anderen Teilanordnung Verbindung haben kann, während für die anschließende Zusammenschaltung der beiden Teilanordnungen eine eindeutige Stelle bestimmt werden muß. Diejenige Teilanordnung, der die niedrigste Ordnungsnummer zugeordnet ist, sendet nun eine Quittung nur an die Teilanordnung mit der nächsthöheren Ordnungsnummer zurück, da ja mehrere Teilanordnungen mit unterschiedlichen Ordnungsnummern unabhängig voneinander direkt mit der Teilanordnung mit der höchsten Ordnungsnummer Verbindung haben können, die aber noch nicht zusammengeschaltet werden. Nur die die Quittung empfangende Teilanordnung geht in einen Wartezustand, bei dem in der Anschlußeinheit am Anfang des Schreib-Kanals dieser von der Synchronisiereinrichtung abgetrennt und mit der eingehenden Leitung des Schreib-Kanals verbunden wird, die bisher noch nicht verwendet worden war. In entsprechender Weise wird die eingehende Leitung des Lese-Kanals, die bisher mit einem Abschluß verbunden war, mit der ausgehenden Leitung des Lese-Kanals verbunden, die bisher noch nicht verwendet war. Dies gilt jeweils für den Informationsanschluß 1 dieser Anschlußeinheit, das ist also die Anschlußeinheit 94. In entsprechender Weise werden die eingehenden und ausgehenden Leitungen des Informationsanschlusses 2 der Anschlußeinheit 97 am anderen Ende jeder Teilanordnung miteinander verbunden.

Die Teilanordnung mit der niedrigsten Ordnungsnummer trennt nun in der Anschlußeinheit, die die niedrigste Ordnungsnummer von der anderen Teilanordnung empfangen hat, d.h. also die nächsthöhere Ordnungsnummer als die eigene, nämlich in der Anschlußeinheit 92, am Ende eines Rahmens den Schreib- und Lese-Kanal auf und verbindet deren Enden mit den entsprechenden Leitungsanschlüssen des Informationsanschlusses, so daß Schreib- und Lese-Kanal über die Verbindung 108 und den Informationsanschluß 3 der Anschlußeinheit 96 mit dem darin ebenfalls aufgetrennten Schreib- und Lese-Kanal verbunden wird, so daß eine neue Teilanordnung aus den bisherigen beiden oberen Teilanordnungen mit den Anschlußeinheiten 90 bis 97 gebildet wird, in der ein von der Anschlußeinheit 90 bis zur Anschlußeinheit 93 verlaufender Schreib-Kanal und ein von diesen zurückverlaufender Lese-Kanal wieder zur Anschlußeinheit 90 vorhanden ist. Mit der ersten Synchronisierinformation, die danach über den neu gebildeten Schreib-Kanal eintrifft, sind zwei Teilanordnungen zu einer neuen, größeren Teilanordnung mit einem alle Anschlußeinheiten umfassenden Schreib- und Lese-Kanal zusammengeschaltet, wie dies in Fig. 9b dargestellt ist. Die neue Teilanordnung hat die Ordnungsnummer der Anschlußeinheit 90. Durch spezielle Steuerinformationen ist dafür gesorgt, daß die beim Umschalten auftretende Informationslücke nicht als Störung interpretiert wird, die eine Rekonfiguration auslöst.

Um die neue Teilanordnung aus den Anschlußeinheiten 90 bis 97 mit der ursprünglich dritten Teilanordnung mit den Anschlußeinheiten 98 bis 101 zu verbinden, erfolgt der beschriebene Vorgang erneut zwischen den beiden jetzt vorhandenen Teilanordnungen, d.h. in den Anschlußeinheiten 98 und 101 erfolgt die Verbindung der Leitungsanschlüsse von Schreib- und Lese-Kanal wie in den Anschlußeinheiten 94 und 97, und in den Anschlußeinheiten 95 und 99 werden diese Kanäle unterbrochen und über die Verbindung 109 zwischen den Informationsanschlüssen 3 miteinander verbunden. Dadurch entsteht schließlich eine Anordnung gemäß der Fig. 9c, in der alle Anschlußeinheiten 90 bis 101 über einen gemeinsamen Schreib- und Lese-Kanal miteinander verbunden sind.

Es ist klar, daß eine solche Rekonfiguration auch bei anderen Störungsstellen bzw. bei anderen Verbindungen von Anschlußeinheiten untereinander über die Informationsanschlüsse 3 möglich ist. Wenn beispielsweise zwischen den Informationsanschlüssen 3 der Anschlußeinheiten 93 und 101 eine Verbindung bestanden hätte, und die untere Teilanordnung aus den Anschlußeinheiten 98 bis 101 hätte eine kleinere als die mittlere Teilanordnung aus den Anschlußeinheiten 94 bis 97, wäre in entsprechender Weise zunächst die obere und die untere Teilanordnung zusammengeschaltet worden, und danach wäre die mittlere Teilanordnung dazugeschaltet worden. Auch dabei ergibt sich wieder ein alle alle Anschlußeinheiten umfassender Schreib-Kanal und Lese-Kanal, wenn auch mit etwas anderem Verlauf als in Fig. 9c dargestellt, jedoch wäre auch dann wieder eine Informationsübertragung von jeder Anschlußeinheit zu jeder anderen Anschlußeinheit möglich.

**Patentansprüche**

1. Anordnung zur Informationsübertragung zwischen einer Anzahl Anschlußeinheiten (11 bis 16, 61 bis 68, 71 bis 78, 90 bis 101), an die informationsaufnehmende und/oder informationsabgebende Geräte angeschlossen sind und von denen jede Anschlußeinheit mindestens zwei getrennte Informationsanschlüsse mit je mindestens zwei Leitungsanschlüssen für zwei Übertragungswege (17, 20, 37; 18, 19, 38; 69, 70) aufweist, über die die Anschlußeinheiten miteinander verbunden sind, so daß im ungestörten Fall mindestens ein alle Anschlußeinheiten nacheinander durchlaufender Informationsübertragungsweg entsteht, in dem ein ständiger Informationsfluß vorhanden ist, wobei jede Anschlußeinheit zur Überwachung des Informationsflusses auf dem Informationsübertragungsweg eine Detektoreinrichtung (21 bis 23) aufweist, die bei Feststellung einer Störung des Informationsflusses die Informationsanschlüsse so miteinander verbindet, daß außerhalb der die Störung hervorrufenden Stelle wieder ein die Anschlußeinheiten verbindender Übertragungsweg vorhanden ist, wobei in jeder Anschlußeinheit die Detektoreinrichtung bei Feststellung einer Störung des Informationsflusses eine Prüfinformation an mindestens eine benachbarte Anschlußeinheit aussendet und jede von einer anderen Anschlußeinheit empfangene Prüfinformation liest und danach abhängig von den empfangenen Prüfinformationen die Informationsanschlüsse untereinander verbindet,
<u>dadurch gekennzeichnet</u>, daß von den alle Anschlußeinheiten (11 bis 16, 61 bis 68, 71 bis 78, 90 bis 101) verbindenden Übertragungswegen (17, 20, 37; 18, 19, 38; 69, 70) der eine als Schreib-Kanal (17, 20, 37; 69) nur zum Übertragen von ausgesendeten, noch nicht ausgewerteten Informationen und der andere der beiden als Lese-Kanal (18, 19, 38; 70) mit dem Ende des Schreib-Kanals nach dessen Durchlaufen aller Anschlußeinheiten verbunden ist und nur zum Übertragen der von allen Anschlußeinheiten ausgesendeten, zu verarbeitenden Informationen dient, daß im gestörten Fall in jeder Anschlußeinheit die Detektoreinrichtung (21 bis 23) die Leitungsanschlüsse (E-(S), S(L) so miteinander verbindet, daß jede von einer anderen Anschlußeinheit empfangene Prüfinformation an diese zurückgesendet wird und
daß die Verbindung zwischen beiden Übertragungswegen im gestörten Fall in derjenigen Anschlußeinheit erfolgt, die nach Feststellung einer Störung des Informationsflusses die eigene im Schreib-Kanal (17, 20, 37; 69) gesendete Prüfinformation nicht richtig erhalten hat, während in der Anschlußeinheit, die keine von einer anderen Anschlußeinheit ausgesandte Prüfinformation empfangen hat, die Verbindung des Schreib-Kanals mit einer in jeder Anschlußeinheit vorhandenen Synchronisiereinrichtung (31, 32, 33; 80) und eine Verbindung des Lese-Kanals mit einem Abschluß (30) erfolgt.

2. Anordnung nach Anspruch 1,
<u>dadurch gekennzeichnet</u>, daß jeder Informationsanschluß sowohl des Schreib-Kanals (69) als auch des Lese-Kanals (70) mit je zwei Leitungsanschlüssen (S(S), E(S); S(L), E(L)) aufweist, von denen der eine einen Informationsfluß über eine von einer anderen Anschlußeinheit eingehende Leitung empfängt und der andere einen Informationsfluß über eine zu dieser anderen Anschlußeinheit abgehende Leitung aussendet, wobei ein alle Anschlußeinheiten umfassender Informationsweg gebildet wird, in dem Schreib-Kanal und Lese-Kanal getrennt parallel verlaufen, daß in jeder Anschlußeinheit die Detektoreinrichtung bei Feststellung einer Störung des Informationsflusses über alle ausgehenden Leitungsanschlüsse (S(S)) des Schreib-Kanals aller Informationsanschlüsse die Prüfinformation aussendet und die auf allen eingehenden Leitungsanschlüssen (E(S); E(L)) beider Kanäle aller Informationsanschlüsse eintreffende Prüfinformation auswertet und nur solche Leitungsanschlüsse (E(S); (E(L)) mit anderen Leitungsanschlüssen (S(S); S(L)) verbindet, bei denen die an beiden Leitungsanschlüssen beider Kanäle angeschlossenen äußeren Verbindungen als intakt festgestellt worden sind.

**3.** Anordnung nach Anspruch 2, dadurch gekennzeichnet, daß jeder Anschlußeinheit (11 bis 16; 61 bis 68, 71 bis 78; 90 bis 101) der Anordnung eine andere Ordnungsnummer zugeordnet ist, daß jede Anschlußeinheit in der Prüfinformation die eigene Ordnungsnummer mit aussendet und daß jede Anschlußeinheit die in den von den anderen Anschlußeinheiten empfangenen Prüfinformationen enthaltenen Ordnungsnummern auswertet.

**4.** Anordnung nach Anspruch 2 oder 3, dadurch gekennzeichnet, daß bei mindestens drei Informationsanschlüssen je Anschlußeinheit (61 bis 68, 71 bis 78) im ungestörten Fall jeweils eine Gruppe von Anschlußeinheiten (z.B. 61 bis 68) über die Verbindung von je zwei der Informationsanschlüsse mindestens einen geschlossenen Informationsübertragungsweg bildet und der bzw. die weiteren Informationsanschlüsse mit entsprechenden Informationsanschlüssen anderer Gruppen verbunden sind, wobei in jeder Anschlußeinheit eingehende Leitungsanschlüsse (E(S); E(L)) mit jeweils dem entsprechenden ausgehenden Leitungsanschluß (S(S); S(L)) nur eines Informationsanschlusses verbindbar sind und die Übertragungswege jeweils zweier Gruppen über die weiteren Informationsanschlüsse je einer Anschlußeinheit jeder Gruppe einen alle Gruppen durchlaufenden Informationsübertragungsweg bilden,
daß bei Feststellung einer Störung des Informationsflusses über alle ausgehenden Leitungsanschlüsse (S(S)) des Schreib-Kanals die Prüfinformation ausgesendet wird, und daß in jeder Anschlußeinheit abhängig von den Informationsanschlüssen, an denen die richtige Prüfinformation empfangen bzw. nicht empfangen wurde, und von dem Inhalt der Prüfinformation sowie abhängig von dem Informationsanschluß, an dem nach Aussendung aller Prüfinformation der Informationsfluß aus einer Synchronisiereinrichtung (80) einer Anschlußeinheit zuerst erscheint, die Detektoreinrichtung die ein- und ausgehenden Leitungsanschlüsse so verbindet, daß mindestens ein über alle Anschlußeinheiten, die untereinander über wenigstens einen Informationsanschluß verbunden sind, verlaufender Informationsübertragungsweg entsteht, wobei diejenige Anschlußeinheit ihre interne Synchronisiereinrichtung mit dem ausgehenden Leitungsanschluß (S(S) des Schreib-Kanals eines vorbestimmten Informationsanschlusses verbindet, die in keiner Prüfinformation eine kleinere Ordnungsnummer als die eigene empfängt und bei der gleichzeitig alle Übertragungskanäle bzw. Verbindungen des vorbestimmten Informationsanschlusses als intakt ausgewertet wurden.

**5.** Anordnung nach Anspruch 4, dadurch gekennzeichnet, daß jede Anschlußeinheit (61 bis 68, 71 bis 78) für jeden eingehenden Leitungsanschluß (E(S), E(L)) von Schreib- und Lese-Kanal einen Umschalter (SS1, SS2, SS3; LS1, LS2, LS3; SL) aufweist, der von der Detektoreinrichtung gesteuert diesen eingehenden Leitungsanschluß mit einem ausgehenden Leitungsanschluß (S(S), S(L)) desselben Kanals nur eines Informationsanschlusses einschließlich des zum betreffenden eingehenden Leitungsanschluß gehörenden Informationsanschlusses verbindet, wobei die Umschalter so geschaltet sind, daß jeder ausgehende Leitungsanschluß mit maximal nur einem eingehenden Leitungsanschluß verbunden ist, daß der ausgehende Leitungsanschluß des Schreib-Kanals eines vorbestimmten Informationsanschlusses von den Ausgängen der Umschalter auf den Ausgang der Synchronisiereinrichtung (Sy) umschaltbar ist, und daß der ausgehende Leitungsanschluß des Lese-Kanals des vorbestimmten Informationsanschlusses an einen weiteren Umschalter (SP1, SP2) angeschlossen ist, der diesen ausgehenden Leitungsanschluß des Lese-Kanals mit einem eingehenden Leitungsanschluß des Schreib-Kanals eines der Informationsanschlüsse verbindet.

**6.** Anordnung nach Anspruch 3, dadurch gekennzeichnet, daß bei mindestens drei Informationsanschlüssen (1, 2, 3) je Anschlußeinheit (90 bis 101) und Bildung je eines alle Anschlußeinheiten umfassenden Schreib- und Lese-Kanals über zwei ausgewählte Informationsanschlüsse (1, 2) aller Anschlußeinheiten im ungestörten Fall der dritte bzw. weitere Informationsanschluß (3) mindestens eines Teils der Anschlußeinheiten (92, 95) mit einem entsprechenden Informationsanschluß (3) von jeweils weit entfernt liegenden Anschlußeinheiten (96, 99) verbunden ist, daß nach der Feststellung einer Störung des Informationsflusses und dem Aussenden und Auswerten der Prüfinformation für jeweils alle über intakte Verbindungen zwischen den ausgewählten Informationsanschlüssen verbundene Anschlußeinheiten ein diese umfassender Schreib- und Lese-Kanal gebildet wird, wobei die Verbindung der Synchronisiereinrichtung mit dem Schreib-Kanal in der Anschlußeinheit (90, 94, 98) jeweils am Anfang des Schreib-Kanals und die Verbindung zwischen Schreib- und Lese-Kanal in der Anschlußeinheit (93, 97, 101) am Ende des Schreib-Kanals erfolgt, und daß danach über die als intakt festgestellten weiteren Informationsanschlüsse der Anschlußeinheiten Prüfinformationen ausgetauscht werden, die die Ordnungsnummern der zugehörigen Anschlußeinheiten enthalten, in denen die Synchronisiereinrichtung angeschaltet sind, und danach die beiden Gruppen mit den niedrigsten Ordnungsnummern zu einem gemeinsamen Informationsübertragungsweg zusammengeschaltet werden, in dem nur in der Anschlußeinheit mit der insgesamt niedrigsten Ordnungsnummer die Synchronisiereinrichtung angeschaltet ist, und dies so oft wiederholt wird, bis alle Anschlußeinheiten, die wenigstens eine gemeinsame Verbindung haben, zu einem gemeinsamen Schreib- und Lese-Kanal miteinander verbunden sind.

## Claims

1. An arrangement for the transmission of information between a number of interconnection units (11 to 16, 61 to 68, 71 to 78, 90 to 101) whereto information receiving and/or information transmitting apparatus are connected, each interconnection unit comprising at least two separate information connections, each of which comprises at least two line connections for two transmission paths (17, 20, 37; 18, 19, 38; 69, 70) via which the interconnection units are interconnected so that in the non-disturbed state at least one information transmission path is formed which successively passes through all interconnection units and which carries a continuous information stream, each interconnection unit comprising a detector device (21 to 23) for monitoring the information stream on the information transmission path, said detector device interconnecting, upon detection of a disturbance of the information stream, the information connections in such a manner that outside the location which causes the disturbance there is again formed a transmission path which interconnects the interconnection units, the detector device in each interconnection unit transmitting, upon detection of a disturbance in the information stream, test information to at least one neighbouring interconnection unit and reading each test information received from another interconnection unit, the information connections being subsequently interconnected thereby in dependence on the test information received, characterized in that one of the transmission paths (17, 20, 37; 18, 19, 38; 69, 70) interconnecting all interconnection units (11 to 16, 61 to 68, 71 to 78, 90 to 101) is connected as a write channel (17, 20, 37; 69) exclusively for transmitting transmitted, not yet evaluated information while the other transmission path is connected as a read channel (18, 19, 38; 70) to the end of the write channel after its passage through all interconnection units and serves exclusively for transmitting the information to be processed which is transmitted by all interconnection units, in that in the event of a disturbance the detector device (21 to 23) in each interconnection unit interconnects the line connections (E(S), S(L)) in such a manner that each test information received from another interconnection unit is returned thereto, and that in the event of a disturbance the connection between the two transmission paths is made in the interconnection unit which, after detection of a disturbance of the information stream, has not correctly received the own test information transmitted via the write channel (17, 20, 37; 69), while in the interconnection unit which has not received any test information transmitted by another interconnection unit the write channel is connected to a synchronization device (31, 32, 33; 80) provided in each interconnection unit and the read channel is connected to a termination (30).

2. An arrangement as claimed in Claim 1, characterized in that each information connection of the write channel (69) as well as of the read channel (70) comprises two line connections (S(S), E(S); S(L), E(L)), one of which receives an information stream via an incoming line frcm another interconnection unit, while the other line connection transmits an information stream via an outgoing line to the same other interconnection unit, thus forming an information path which covers all interconnection units and in which the write channel and the read channel extend separately in parallel, the detector device in each interconnection unit transmitting the test information, upon detection of a disturbance of the information stream, via all outgoing line connections (S(S)) of the write channel of all information connections and evaluating the test information arriving via all incoming line connections (E(S); E(L)) of both channels of all information connections,

the detector device connecting only line connections (E(S);E(L)) to other line connections (S(S); S(L)) for which it has been determined that the external connections to both line connections of both channels are in order.

3. An arrangement as claimed in Claim 2, characterized in that a different sequence number is assigned to each interconnection unit (11 to 16; 61 to 68; 71 to 78; 90 to 101) of the arrangement, each interconnection unit transmitting its own sequence number which is contained in the test information and evaluating the sequence numbers contained in the test information received from the other interconnection units.

4. An arrangement as claimed in Claim 2 or 3, characterized in that when each interconnection unit (61 to 68, 71 to 78) comprises at least three information connections, in the non-disturbed state a group of interconnection units (for example, 61 to 68) each time forms at least one closed information transmission path via the connection of each time two of the information connections, the further information connection(s) being connected to corresponding information connections of other groups, incoming line connections (E(S);E(L)) in each interconnection unit being connectable to the corresponding outgoing line connection (S(S)-;S(L)) of only one information connection, the transmission paths of each time two groups forming, via the further information connections of each time one interconnection unit of each group, an information transmission path which passes through all groups, in that upon detection of a disturbance of the information stream via all outgoing line connections (S(S)) of the write channel the test information is transmitted, and in that the detector device in each interconnection unit connects, depending on the information connections on which the correct test information has been received or not received, on the contents of the test information as well as on the information connection on which, after the transmission of all test information, the data stream from a synchronization device (80) of an interconnection unit appears first, the incoming and outgoing line connections in such a manner that at least one information transmission path is formed which extends via all interconnection units which are interconnected via at least one information connection, the interconnection unit which does not receive a sequence number in any test information which is lower than its own number and in which at the same time all transmission channels or lines of the predetermined information connection have been determined to be in order, then connecting its internal synchronization device to the outgoing line connection (S(S)) of the write channel of a predetermined information connection.

5. An arrangement as claimed in Claim 4, characterized in that each interconnection unit (61 to 68, 71 to 78) comprises, for each incoming line connection (E(S),E(L)) of the write channel and the read channel, a switch (SS1, SS2, SS3; LS1, LS2, LS3; SL) which is controlled by the detector device and which connects said incoming line connection to an outgoing line connection (S(S), S(L)) of the same channel of only one information connection, including the information connection associated with the relevant incoming line connection, the switches being connected so that each outgoing line connection is connected to at the most one incoming line connection, the outgoing line connection of the write channel of a predetermined information connection being switchable from the outputs of the switch to the output of the synchronization device (Sy), the outgoing line connection of the read channel of the predetermined information connection being connected to a further switch (SP1, SP2) which connects the relevant outgoing line connection of the read channel to an incoming line connection of the write channel of one of the information connections.

6. An arrangement as claimed in Claim 3, characterized in that in the case of at least three information connections (1, 2, 3) per interconnection unit (90 to 101) and the formation of each time a respective write channel and a read channel which cover all interconnection units via two selected information connections (1, 2) of all interconnection units, the third or further information connection (3) of at least a fraction of the interconnection units (92, 95) is connected to a corresponding information connection (3) of each time remote interconnection units (96, 99) in the non-disturbed case, while after detection of a disturbance of the information stream and the transmission and evaluation of the test information, a write channel and a read channel are formed for all interconnection units connected via non-disturbed connections between the selected information connections, the connection of the synchronization device to the write channel in the interconnection unit (90, 94, 98) taking place each time at the beginning of the write channel while the connection between the write

channel and the read channel in the interconnection unit (93, 97, 101) takes place at the end of the write channel, after which test information is exchanged via the further information connections of the interconnection units which have been determined to be in order, said test information containing the sequence numbers of the associated interconnection units in which the synchronization device is activated, after which the two groups having the lowest sequence numbers are interconnected so as to form a common information transmission path in that the synchronization device is activated only in the interconnection unit having the overall lowest sequence number, the described procedure being repeated until all interconnection units which have at least one common connection have been interconnected so as to form a common write and read channel.

**Revendications**

1. Montage pour la transmission d'informations entre un certain nombre d'unités de connexion (11 à 16, 61 à 68, 71 à 78, 90 à 101) auxquelles sont connectés des appareils recevant des informations et/ou des appareils émettant des informations et qui comportent chacune au moins deux connexions d'informations séparées avec chacune au moins deux connexions de lignes pour deux voies de transmission (17, 20, 37; 18, 19 38; 69, 70), par l'intermédiaire desquelles les unités de connexion sont interconnectées, de sorte que, dans le cas non perturbé, est établie au moins une voie de transmission d'informations traversant successivement toutes les unités de connexion, dans laquelle un flux d'informations constant est présent, chaque unité de connexion comprenant, en vue de la surveillance du flux d'informations présent sur la voie de transmission d'informations, un dispositif détecteur (21 à 23) qui, lors de la constatation d'une perturbation du flux d'informations, interconnecte les connexions d'informations d'une manière telle qu'à l'extérieur de l'endroit provoquant la perturbation, s'établisse à nouveau une voie de transmission connectant les unités de connexion tandis que, dans chaque unité de connexion, le dispositif détecteur, lorsqu'il constate une perturbation du flux d'informations, émet une information de contrôle vers au moins une unité de connexion voisine et lit chaque information de contrôle reçue d'une autre unité de connexion, puis, en fonction des informations de contrôle reçues, interconnecte les connexions d'informations, caractérisé en ce que parmi les voies de transmission (17, 20, 37; 18, 19, 38; 69,70) reliant toutes les unités de connexion ( 11 à 16, 61 à 68, 71 à 78, 90 à 101), l'une n'est connectée qu'en tant que canal d'écriture (17, 20, 37; 69) pour la transmission d'informations émises, mais pas encore évaluées, et l'autre est connectée en tant que canal de lecture (18, 19, 38; 70) à l'extrémité du canal d'écriture, après son passage dans toutes les unités de connexion et ne sert qu'à la transmission des informations à traiter, émises par toutes les unités de connexion, que, dans le cas d'une perturbation, dans chaque unité de connexion, le dispositif détecteur (21 à 23) connecte les connexions de lignes [E(S), S(L)] l'une à l'autre d'une manière telle que chaque information de contrôle reçue d'une autre unité de connexion soit renvoyée à celle-ci et que la liaison entre les deux voies de transmission, dans le cas d'une perturbation, s'effectue dans l'unité de connexion qui, après constatation d'une perturbation du flux d'informations, n'a pas reçu correctement l'information de contrôle propre émise dans le canal d'écriture (17, 20, 37; 69), tandis que, dans l'unité de connexion qui n'a pas reçu l'information de contrôle émise par une autre unité de connexion sont effectuées la liaison du canal d'écriture à un dispositif de synchronisation (31, 32, 33; 80) présent dans chaque unité de connexion et une liaison du canal de lecture à une terminaison (30).

2. Montage suivant la revendication 1, caractérisé en ce que chaque connexion d'information du canal d'écriture (69) et du canal de lecture (70) comporte chaque fois deux connexions de lignes [S(S), E(S); S(L), E(L)], dont l'une reçoit un flux d'informations par l'intermédiaire d'une ligne d'entrée provenant d'une autre unité de connexion et dont l'autre émet un flux d'information par l'intermédiaire d'une ligne de sortie allant vers cette autre unité de connexion, une voie d'informations comprenant toutes les unités de connexion étant formée, dans laquelle le canal d'écriture et le canal de lecture séparés s'étendent parallèlement, que dans chaque unité de connexion, le dispositif détecteur, lors de la constatation d'une perturbation du flux d'informations, émet l'information de contrôle par l'intermédiaire de toutes les connexions de lignes de sortie [S(S)] du canal d'écriture à toutes les connexions d'informations, et évalue l'information de contrôle arrivant de toutes les connexions d'informations sur toutes les connexions de lignes d'entrée [E(S); E(L)] des deux canaux et ne connecte à d'autres connexions de lignes [S(S); S(L)] que les

connexions de lignes [E(S); E(L)] dans lesquelles les liaisons extérieures connectées aux deux connexions de lignes des deux canaux se sont avérées intactes.

3. Montage suivant la revendication 2, caractérisé en ce qu'à chaque unité de connexion (11 à 16; 61 à 68; 71 à 78; 90 à 101) du montage est associé un autre numéro d'ordre, que chaque unité de connexion émet avec son information de contrôle, son numéro d'ordre propre et que chaque unité de connexion évalue les numéros d'ordre contenus dans les informations de contrôle reçues des autres unités de connexion.

4. Montage suivant la revendication 2 ou 3, caractérisé en ce qu'en présence d'au moins trois connexions d'informations par unité de connexion (61 à 68, 71 à 78), dans le cas non perturbé, chaque fois un groupe d'unités de connexion (par exemple 61 à 68) forme au moins une voie de transmission d'informations fermée par l'intermédiaire de la liaison de chaque fois deux des connexions d'informations et la ou les autres connexions d'informations sont reliées à des connexions d'informations correspondantes d'autres groupes, auquel cas, dans chaque unité de connexion, les connexions de lignes d'entrée [E(S); E(L)] ne peuvent chaque fois être connectées qu'à la connexion de lignes de sortie correspondante [S(S); S(L)] d'une seule connexion d'informations et les voies de transmission de chaque fois deux groupes forment, par l'intermédiaire des autres connexions d'informations de chaque fois une unité de connexion de chaque groupe, une voie de transmission d'informations passant par tous les groupes, que, dans le cas de la constatation d'une perturbation du flux d'informations, l'information de contrôle est émise, par l'intermédiaire de toutes les connexions de lignes de sortie [S(S)] du canal d'écriture, et que, dans chaque unité de connexion, en fonction des connexions d'informations qui ont reçu ou qui n'ont pas reçu l'information de contrôle correcte et du contenu de l'information de contrôle, ainsi qu'en fonction de la connexion d'informations à laquelle, après émission de toutes les informations de contrôle, le flux d'informations apparaît en premier lieu en provenance d'un dispositif de synchronisation (80) d'une unité de connexion, le dispositif détecteur connecte les connexions de lignes d'entrée et de sortie d'une manière telle que soit formée au moins une voie de transmission d'informations passant par toutes les unités de connexion qui sont interconnectées par l'intermédiaire d'au moins une connexion d'informations, auquel cas l'unité de connexion qui relie son dispositif de synchronisation interne à la connexion de lignes de sortie [S(S)] du canal d'écriture d'une connexion d'informations prédéterminée, est celle qui ne reçoit dans aucune information de contrôle, un numéro d'ordre inférieur à son numéro propre et dans laquelle en même temps tous les canaux de transmission ou toutes les liaisons de la connexion d'informations prédéterminée sont évalués comme étant intacts.

5. Montage suivant la revendication 4, caractérisé en ce que chaque unité de connexion (61 à 68, 71 à 78) pour chaque connexion de lignes d'entrée [E(S), E(L)] du canal d'écriture et de lecture comporte un commutateur (SS1, SS2, SS3; LS1, LS2, LS3; SL) qui, sous la commande du dispositif détecteur, connecte cette connexion de lignes d'entrée à une connexion de lignes de sortie [S(S), S(L)] de ce même canal d'une seule connexion d'informations, y compris de la connexion d'informations appartenant à la connexion de lignes d'entrée en question, le commutateur étant connecté d'une manière telle que chaque connexion de lignes de sortie ne soit connectée au maximum qu'à une connexion de lignes d'entrée, que la connexion de lignes de sortie du canal d'écriture d'une connexion d'informations prédéterminée puisse être commutée des sorties du commutateur sur la sortie du dispositif de synchronisation (Sy) et que la connexion de lignes de sortie du canal de lecture de la connexion d'informations prédéterminée soit connectée à un autre commutateur (SP1, SP2) qui connecte cette connexion de lignes de sortie du canal de lecture à une connexion de lignes d'entrée du canal d'écriture d'une des connexions d'informations.

6. Montage suivant la revendication 3, caractérisé en ce que, dans le cas d'au moins trois connexions d'informations (1, 2, 3) par unité de connexion (90 à 101) et dans le cas de la formation de chaque fois un canal d'écriture et un canal de lecture comprenant toutes les unités de connexion, par l'intermédiaire de deux connexions d'informations (1, 2) sélectionnées de toutes les unités de connexion, dans le cas non perturbé, la troisième ou une autre connexion d'informations (3) d'au moins une partie des unités de connexion (92, 95) est connectée à une connexion d'informations correspondante (3) d'unités de connexion chaque fois très éloignées (96, 99), qu'après la constatation d'une perturbation du flux d'informations

et après l'émission et l'évaluation de l'information de contrôle pour chaque fois toutes les unités de connexion reliées par l'intermédiaire de liaisons intactes entre les connexions d'informations sélectionnées, un canal d'écriture et de lecture qui les comprend est formé, la liaison du dispositif de synchronisation au canal d'écriture dans l'unité de connexion (90, 94, 98) s'effectuant chaque fois au début du canal d'écriture et la liaison entre le canal d'écriture et de lecture dans l'unité de connexion (93, 97, 101), à la fin du canal d'écriture, et que, par après, par l'intermédiaire des autres connexions d'informations constatées intactes sont échangées des informations de contrôle qui contiennent les numéros d'ordre des unités de connexion associées dans lesquelles le dispositif de synchronisation est enclenché, puis les deux groupes portant les numéros d'ordre les plus bas sont interconnectés pour former une voie de transmission d'informations commune dans laquelle le dispositif de synchronisation n'est enclenché que dans l'unité de connexion portant le numéro d'ordre le plus bas de l'ensemble et ceci est répété jusqu'à ce que toutes les unités de connexion qui présentent au moins une liaison commune soient reliées ensemble en un canal d'écriture et de lecture commun.

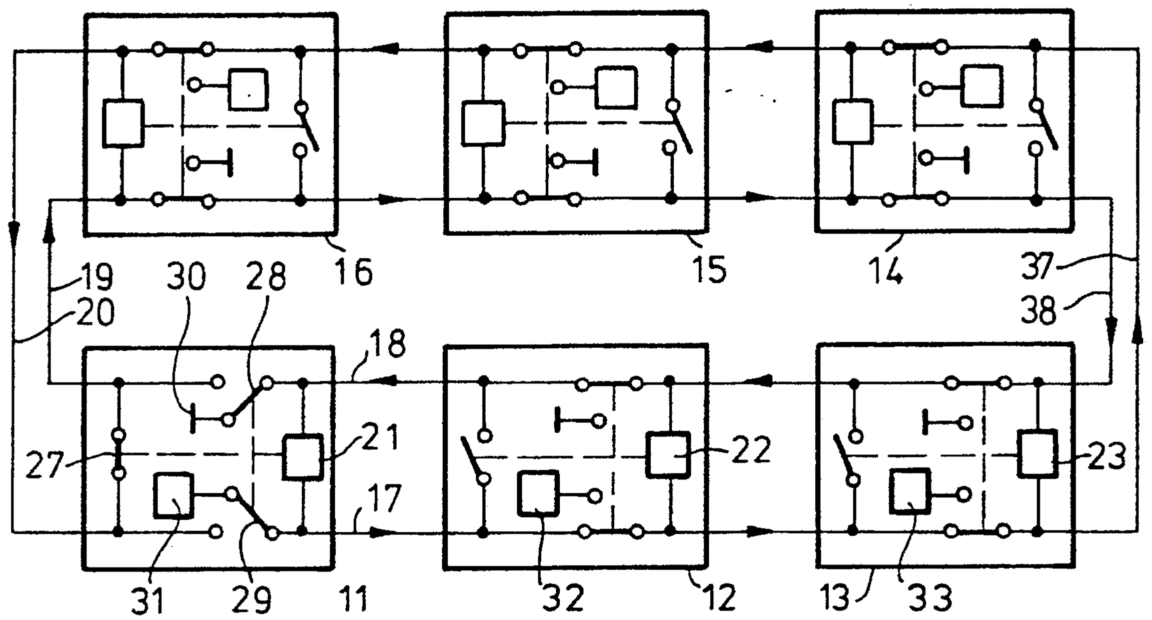
16
15
14
19
20
30
28
37
38
18
27
21
22
23
17
31
29
11
32
12
13
33

Fig. 1

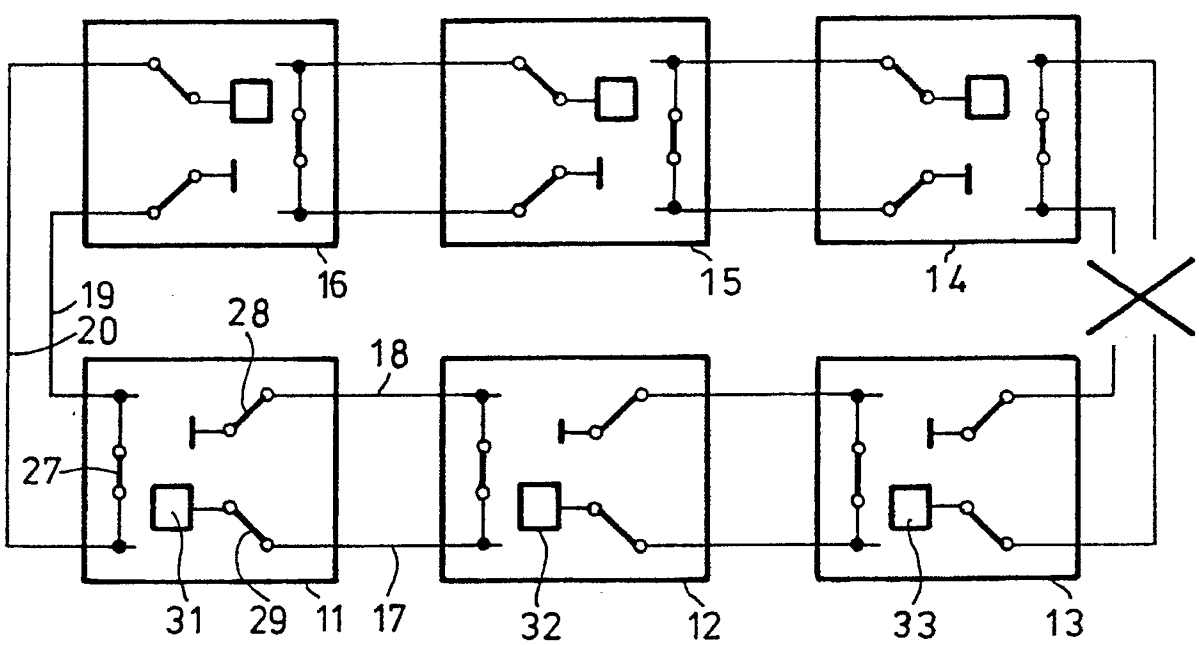
16
15
14
19
20
28
18
27
31
29
11
17
32
12
33
13

Fig. 2

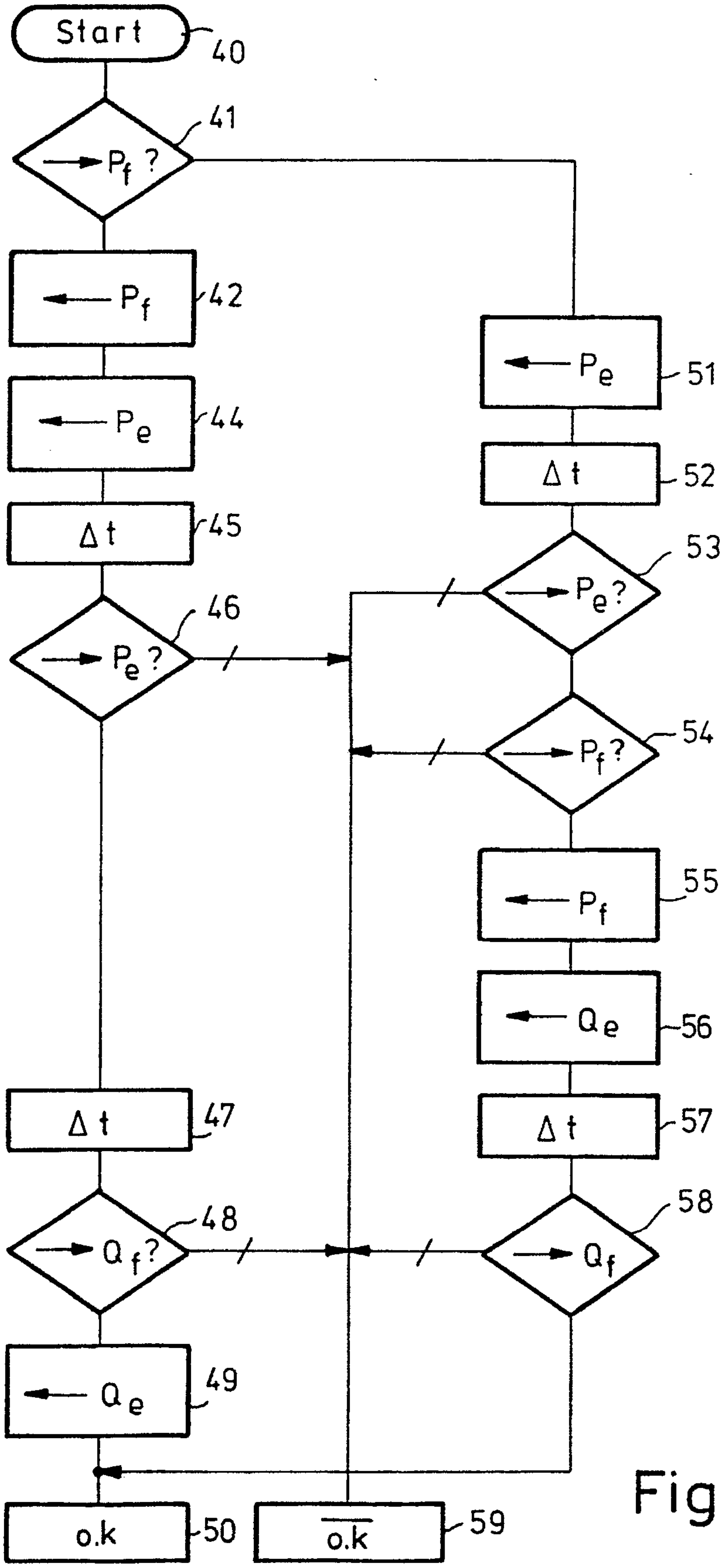
Start
40
41
→ Pf ?
← Pf
42
← Pe
44
Δ t
45
→ Pe ?
46
Δ t
47
→ Qf ?
48
← Qe
49
o.k
50
o.k
59
← Pe
51
Δ t
52
→ Pe ?
53
→ Pf ?
54
← Pf
55
← Qe
56
Δ t
57
→ Qf
58

Fig. 3

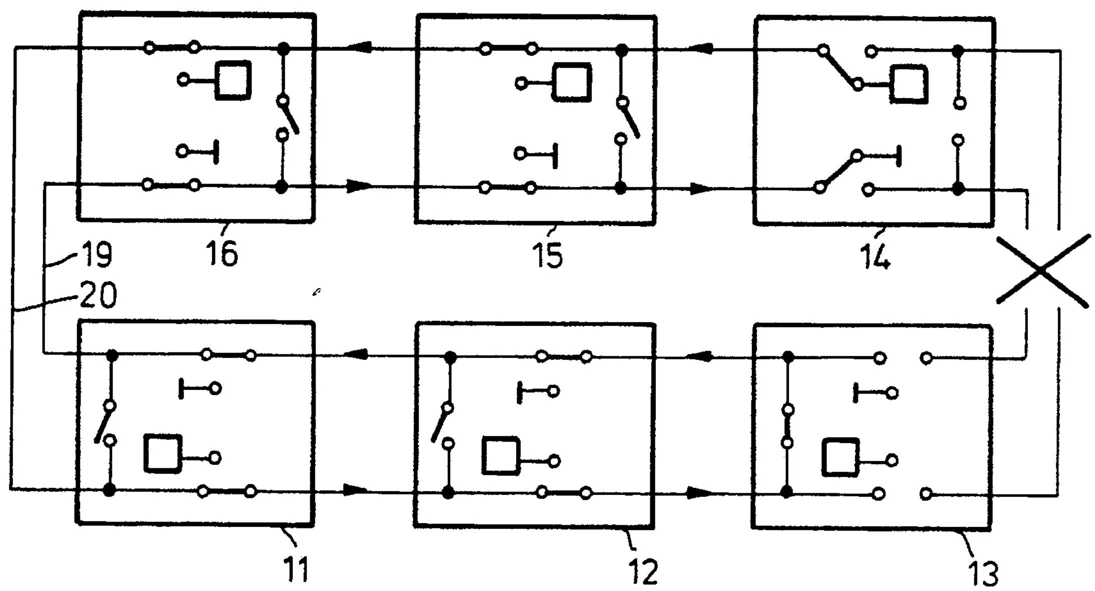
19
20
16
15
14
11
12
13

Fig.4

Fig. 6

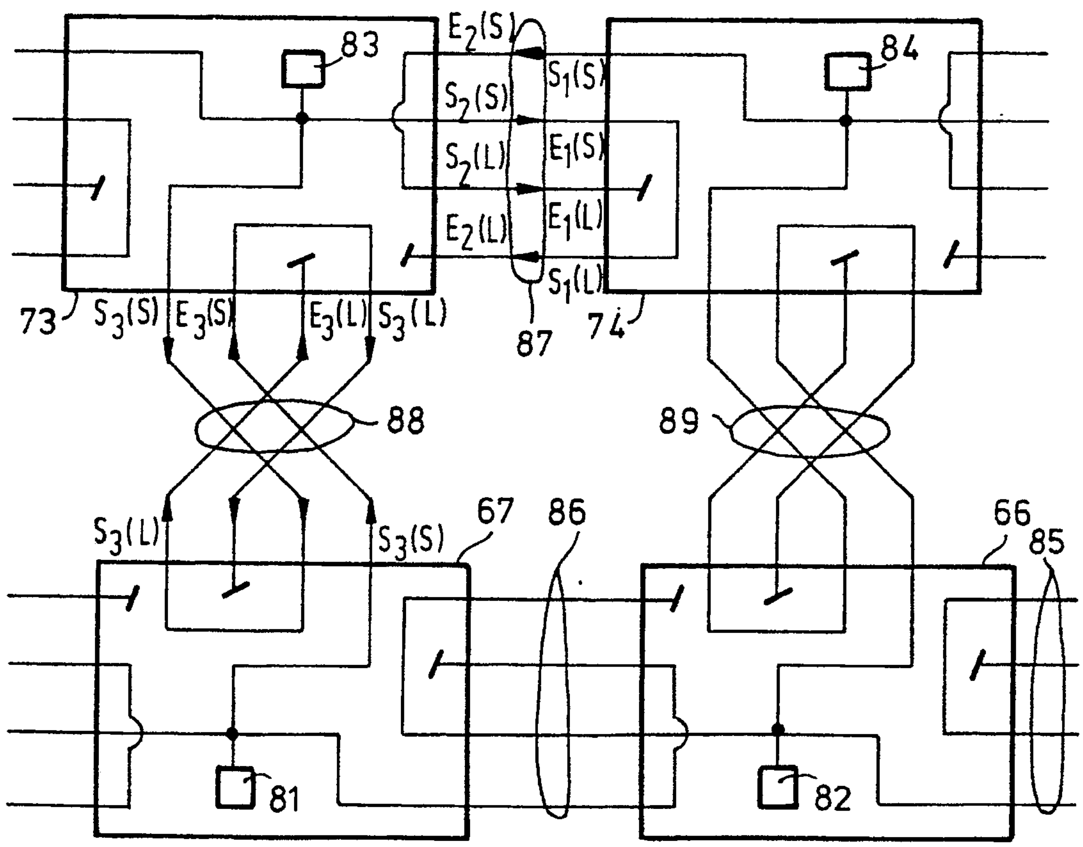
83
84
$E_2(S)$
$S_2(S)$
$S_2(L)$
$E_2(L)$
$S_1(S)$
$E_1(S)$
$E_1(L)$
$S_1(L)$
73
$S_3(S)$
$E_3(S)$
$E_3(L)$
$S_3(L)$
87
74
88
89
$S_3(L)$
$S_3(S)$
67
86
66
85
81
82

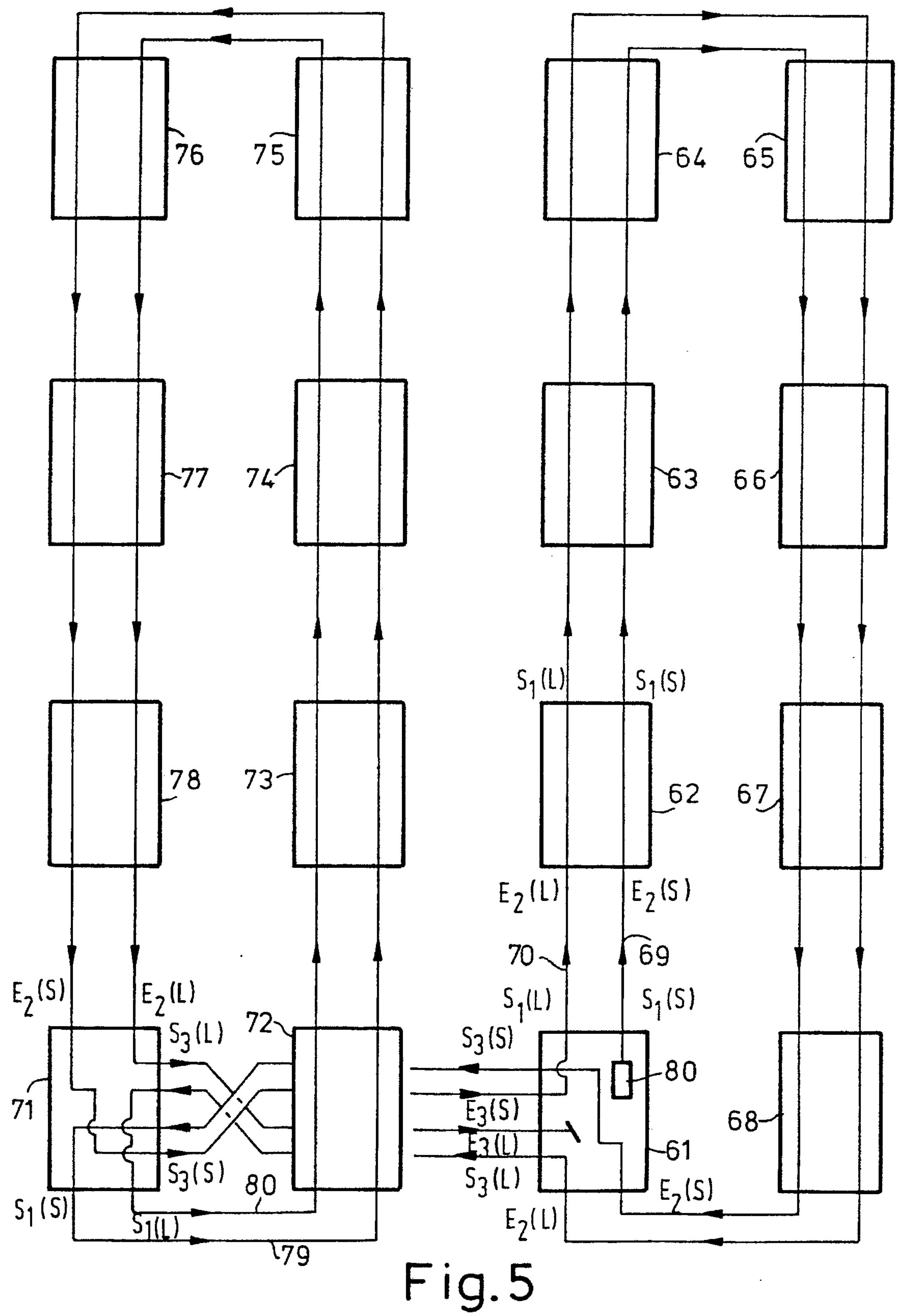
76
75
64
65
77
74
63
66
78
73
62
67
$S_1$(L)
$S_1$(S)
$E_2$(L)
$E_2$(S)
70
69
$S_1$(L)
$S_1$(S)
$E_2$(S)
$E_2$(L)
$S_3$(L)
72
71
$S_3$(S)
80
$S_1$(S)
$S_1$(L)
79
$S_3$(S)
80
$E_3$(S)
$E_3$(L)
61
68
$S_3$(L)
$E_2$(S)
$E_2$(L)

Fig. 5

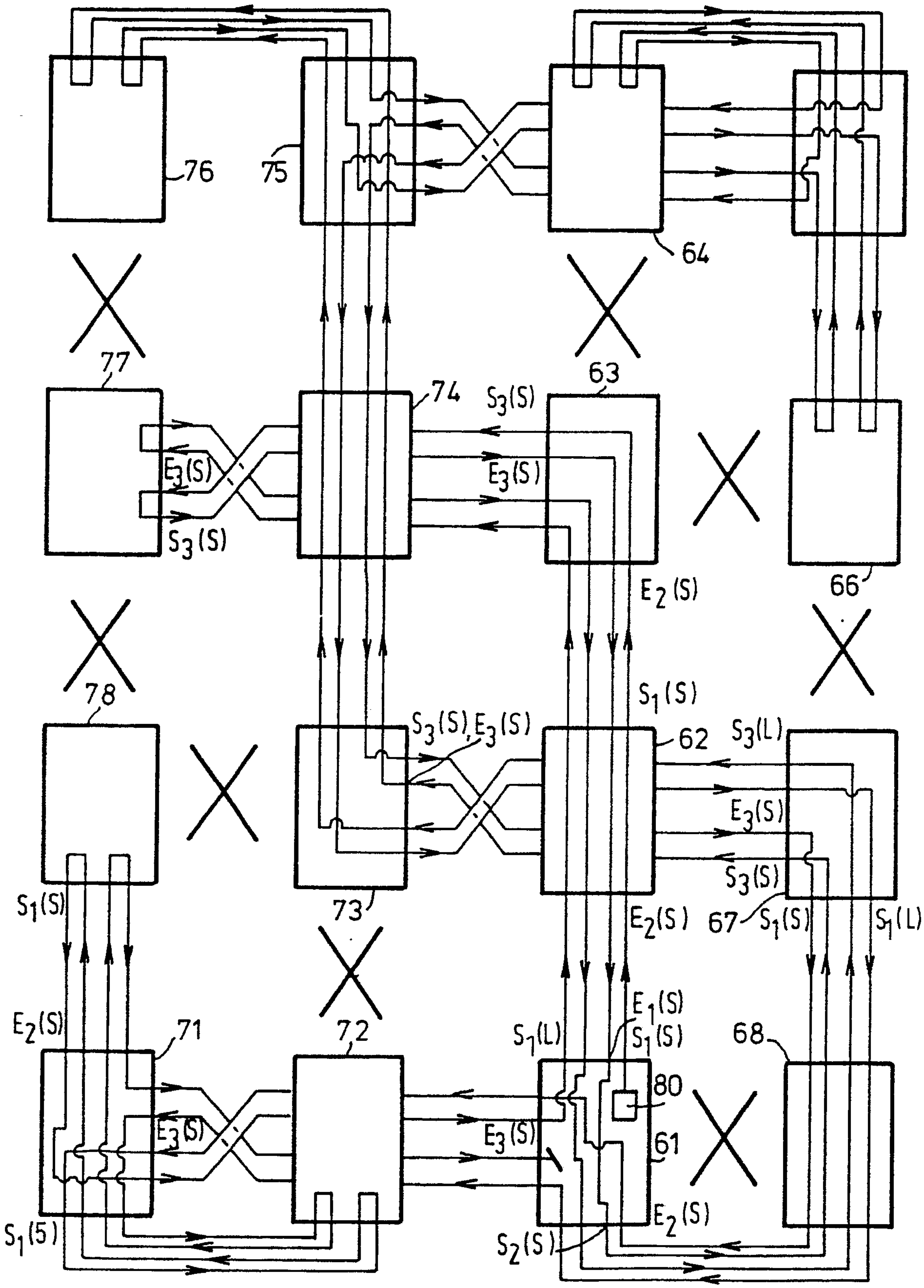
76
75
64
77
74
63
66
78
73
62
67
71
72
61
68
80
$S_3(S)$
$E_3(S)$
$E_2(S)$
$S_1(S)$
$S_3(S), E_3(S)$
$S_3(L)$
$S_1(L)$
$S_1(5)$
$E_1(S)$
$S_2(S)$

Fig.7

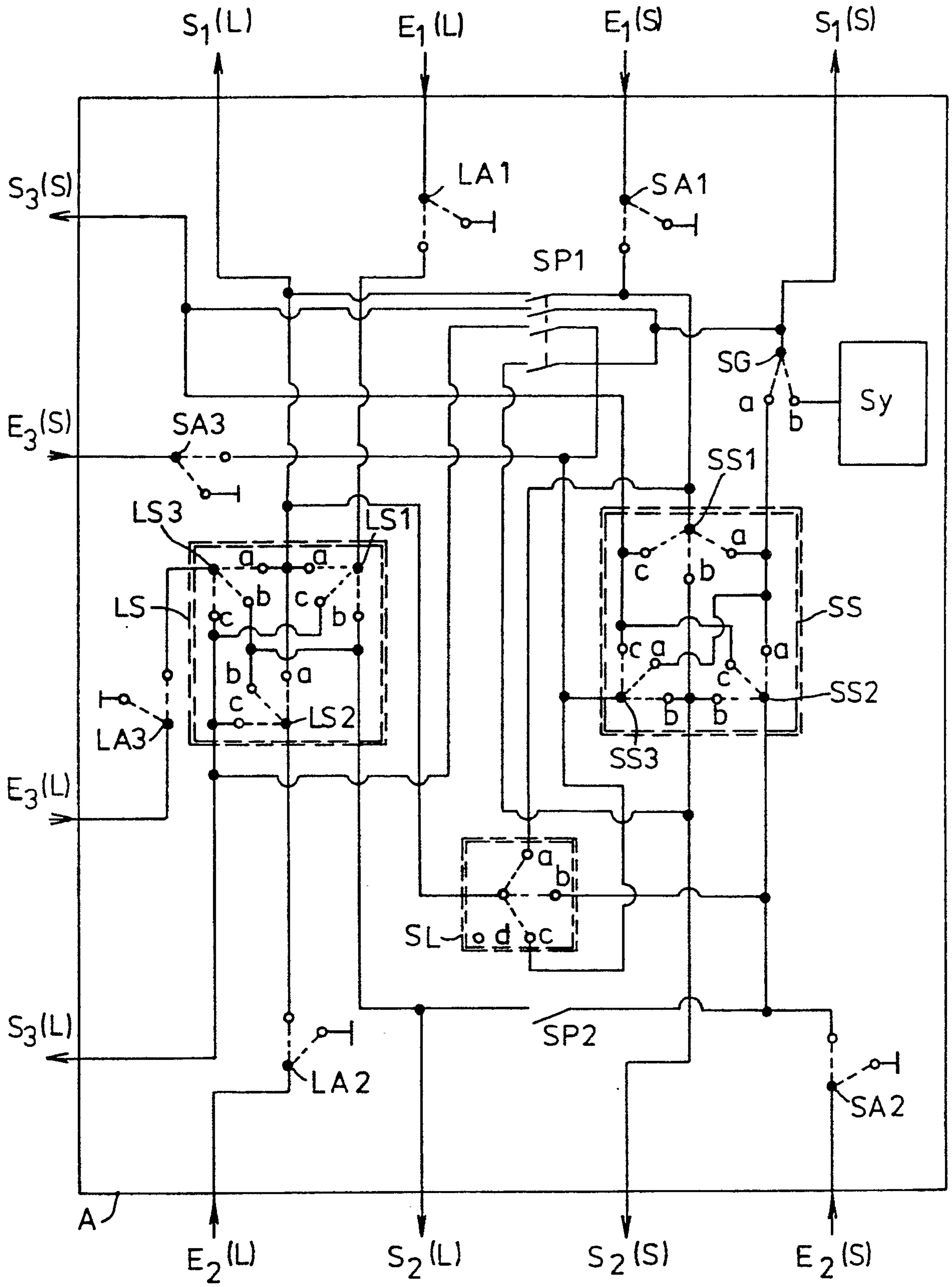
S1(L)
E1(L)
E1(S)
S1(S)
LA1
SA1
SP1
S3(S)
SG
a
b
Sy
E3(S)
SA3
SS1
LS3
LS1
a
a
c
b
LS
b
c
b
c
c
a
a
SS
b
a
c
c
SS2
LA3
LS2
b
b
SS3
E3(L)
a
b
SL
d
c
S3(L)
SP2
LA2
SA2
A
E2(L)
S2(L)
S2(S)
E2(S)

Fig.8

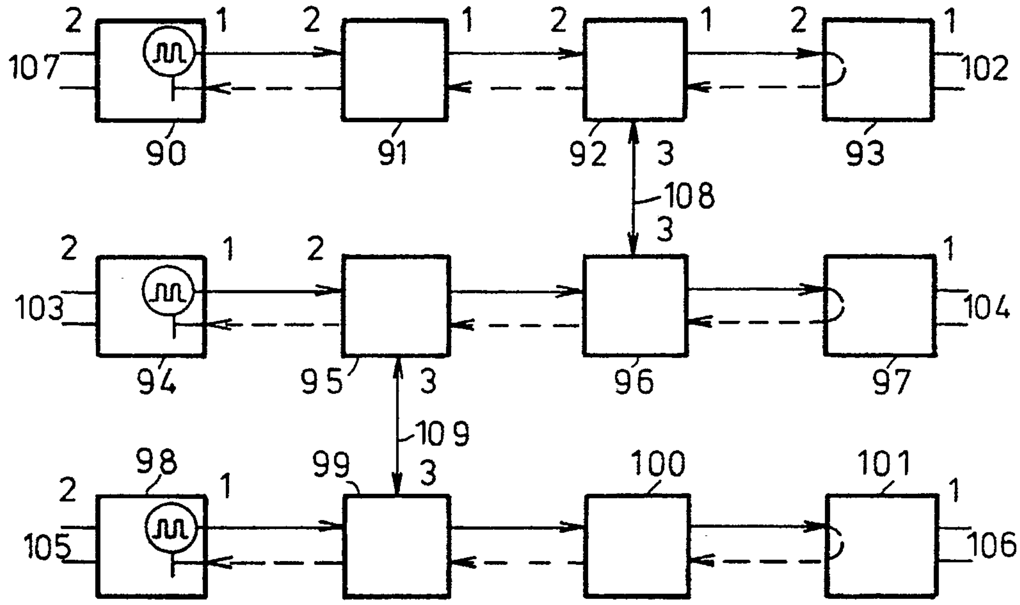

2
1
2
1
2
1
2
1
107
102
90
91
92
3
93
108
3
2
1
2
1
103
104
94
95
3
96
97
109
98
99
3
100
101
2
1
1
105
106


Fig. 9a

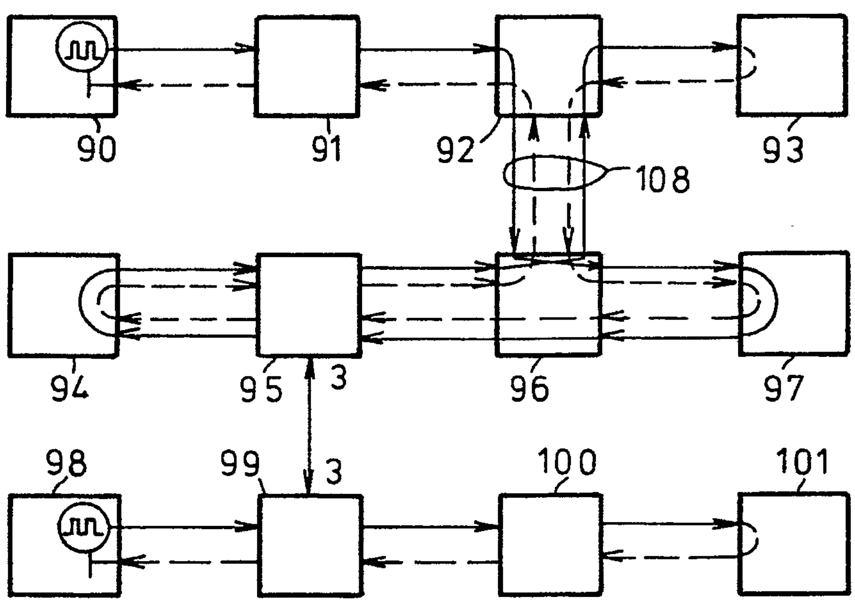

90
91
92
93
108
94
95
3
96
97
98
99
3
100
101


Fig. 9b

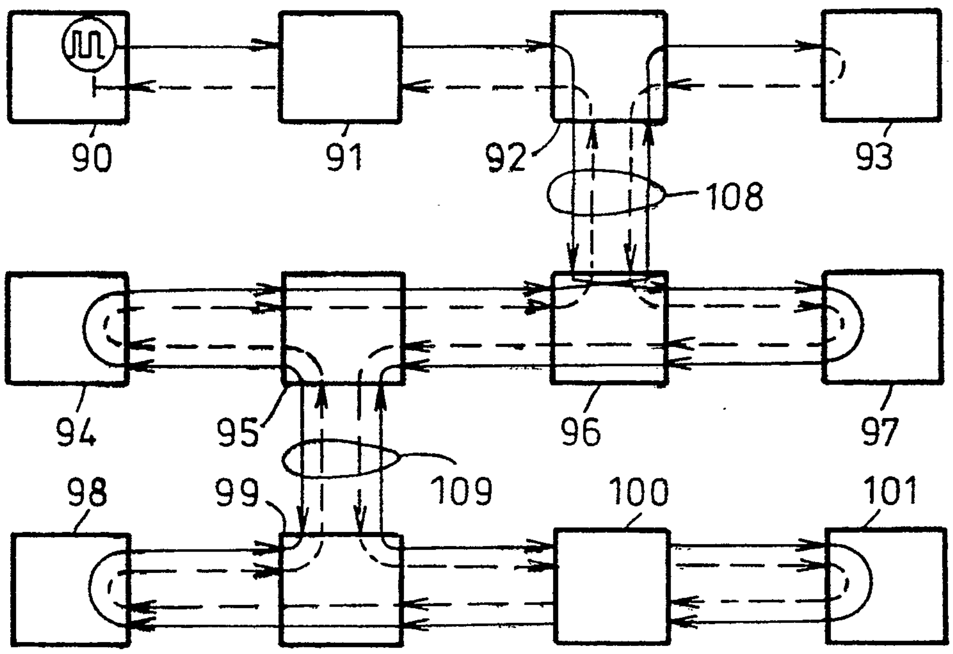


Fig.9c